# EUROPEAN PATENT APPLICATION

(11) **EP 1 178 627 A1**
(43) Date of publication of application: **06.02.2002**
(21) Application number: 00306578.6
(22) Date of filing: 02.08.2000
(51) Int. Cl.: H04L 12/18, H04L 1/16

(54) **Method of multicasting**

(71) Applicant: HITACHI EUROPE LIMITED, Maidenhead, Berkshire, SL6 8YA (GB)
(72) Inventor: Hayashi, Masato, 06400 Cannes (FR); Abe, Masahiro, Cambridge, CB3 0EW (GB); Matsui, Susumi, 3 chome,Machida-city,Tokyo Pref194-0002 (JP); Bonnet, Christian, 06560 Valbonne (FR)
(74) Representative: Read, Matthew Charles

(57) **Abstract**

A method of multicasting data from a sender to first, second and third receivers through a network including first and second routers, the method comprising transmitting a data packet from said sender to said first, second and third receivers, detecting at said first, second and third receivers whether said data packet is properly received, transmitting a first reception information signal from said first receiver to said first router by a first path, transmitting a second reception information signal from said second receiver to said first router by a second path, determining, at said first router, in dependence upon said first and second reception information signals, whether said first and second receivers require re-transmission of said data packet and, if so, transmitting information relating to said first and second detection information signals to said second router, determining, at said second router, whether said third receiver requires re-transmission of said data packet and, if not, instructing said first router to re-transmit said data packet to said first and second receivers.

## Description

The present invention relates to a method of multicasting data through a network, particularly but not exclusively, a mobile network.

The routing of data around diverse networks, which make up the Internet is based on a protocol known as the Internet Protocol (IP). Data is transferred in the form of data units known as IP datagrams between points in the Internet specified by IP addresses.

There are three ways in which data may be distributed between points. The first is unicast, in which data is transmitted from a single sender to a single recipient. The second is broadcast, in which data is transmitted throughout the network. The third is multicast, in which data is transmitted from a single sender to a group of recipients.

In general multicast transmission, a sender transmits data, via a network, to a plurality of hosts using a multicast group address. However, this method takes no account of whether data transmission was successful.

Reliable multicast transmission ensures successful transmission and generally comprises three stages. In the first stage, known as initial transmission, a sender transmits data, via a network, to a plurality of hosts using a multicast group address. In the second stage, known as acknowledgement, the hosts indicate success or failure of the initial transmission. In the third stage, known as recovery, any missing or corrupted data is retransmitted to the appropriate host. Overviews of multicasting are given in "Multicast Networking and Application" by C. Kenneth Miller, Addison-Wesley 1988 [ISBN 0-201-30979-3] and in "Deploying IP MULTICAST in the Enterprise" by T. Maufer, Prentice Hall PTR, 1998 [ISBN 0-13-897687-2].

For multicast transmission to work efficiently and to serve a large number of hosts, the network should preferably possess properties of high reliability of transmission and high scalability. Reliability of transmission is the likelihood of an intended recipient receiving data. Scalability reflects the number of hosts that the network can accommodate. Thus, a network with high scalability can accommodate almost any number of hosts.

High reliability is achieved by effective recovery. Two general recovery strategies are employed in multicasting. In the first, the sender is responsible for retransmission of data. In the second, one or more recipients co-ordinates retransmission for the rest of the multicast group.

In the sender-based strategy, the sender obtains responses, called reception states, from each receiver indicating whether the receiver correctly received the initial transmitted data and retransmits lost or corrupted data to receivers found wanting. However, this type of recovery has drawbacks in multicast communication. As the number of recipients increases, the sender is swamped with responses. This is known as the implosion problem. It results in overload of processing overhead at the sender, delay in data communication and loss of messages. Generally, traditional point-to-point data transfer protocols such as Transmission Control Protocol (TCP) RFC793 and High level Data Link Control (HDLC) and early multicast/broadcast protocols use this type of recovery.

In the receiver-based strategy, one or more control receivers are selected from, and are assigned to serve, a local group of receivers. The control receiver manages recovery instead of the sender. This type of recovery avoids the implosion problem, but has its own drawbacks, especially in networks where the receivers are connected to the network by low-capacity or unreliable links, such as radio links. The control receivers are forced to retransmit data over low-capacity links to the network and then from the network to other receivers. Thus, poor performance of the control receiver and low capacity links can cause low throughput, resulting in slow recovery.

Several protocols have been proposed to implement receiver-based recovery. "A Reliable Multicast Framework for Light-weight Sessions and Application Level Framing", by S. Floyd et al., ACM SIGCOMM 95 describes Scalable Reliable Multicast (SRM). SRM does not breakdown the multicast group in smaller local groups. Any receiver that received data correctly may be used as the retransmitter for the whole multicast group.

"Reliable IP Multicast-PGM Overview", A Stardust Forums Sate of the Art Report, April 1998 and "PGM Reliable Transport Protocol Specification" by T. Speakman et al., which may be found at http://search.ietf.org/internet-drafts/draft-speakman-pgm-spec-03.txt describe Pretty Good Multicast (PGM) PGM routers co-ordinate distribution of failure messages. However, retransmission may be left to any receiver or even the sender.

"A Generic Concept for Large-Scale Multicast" by M. Hofmann, Proceedings of International Zurich Seminar on Digital Communications (IZS'96), Springer Verlag, February 1996 discloses Local Group Multicast Protocol (LGMP). This protocol defines local groups within the multicast group. The sender periodically polls a request to all receivers for reception states. A group controller takes charge of responding to these reception states for the local group under its control and retransmits data by unicast or multicast. Under this protocol, any receiver may serve as the group controller. However, there is no description of how the group controller is selected.

"MESH: Distributed Error Recovery for Multimedia Streams in Wide-Area Multicast Networks", by M. T. Lucus et al., Proceedings ICC'97 is concerned with time-constraint applications such as the transmission of voice and video signals. The network is arranged into local-area and wide-area networks. A local-area network may comprise several local groups and each local group has an active receiver in charge of local recovery. Active receivers exchange information about the network with each other. However, there is no disclosure of how local groups are formed and how an active receiver is selected.

"Reliable Multicast Transport Protocol (RMTP)" by S. Paul et al., IEEE Journal on Selected Areas in Communications, Vol. 15, No. 3, April 1997, US 5905871 and EP 0698975 describe Reliable Multicast Transport Protocol (RMTP). RMTP uses local groups. A designated receiver takes charge of monitoring the network and local recovery. RMTP system has a hierarchical structure of regions in each of which a designated receiver is elected. Recovery by the designated receiver is carried out using unicasting or multicasting depending on the number of erroneous receivers. However, the process of choosing designated receivers and the organisation of local groups is done manually. Thus, this system does not optimise recovery traffic within the local-area network and each local group. This will delay recovery.

Multicast transmission may take place through a mobile network. A mobile network is a network that supports mobility, for example a cellular network. If a receiver terminal moves to another area or radio cell, there is a possibility that the multicast session may be cut off because the radio channel is interrupted for a short time during hand-over. This cut-off causes data losses and may lead to delays in communication. For receiver-based methods of recovery, this problem may also arise if the selected control receiver moves to another area or radio cell as this requires handing over of the role of local group controller to another receiver.

The present invention seeks to provide an improved method of multicasting.

According to the present invention there is provided a method of multicasting data from a sender to first, second and third receivers through a network including first and second routers, the method comprising transmitting a data packet from said sender to said first, second and third receivers, detecting at said first, second and third receivers whether said data packet is properly received, transmitting a first reception information signal from said first receiver to said first router by a first path, transmitting a second reception information signal from said second receiver to said first router by a second path, determining, at said first router, in dependence upon said first and second reception information signals, whether said first and second receivers require re-transmission of said data packet and, if so, transmitting information relating to said first and second detection information signals to said second router and determining, at said second router, whether said third receiver requires re-transmission of said data packet and, if not, instructing said first router to re-transmit said data packet to said first and second receivers.

This has the advantage that recovery is managed locally by a router within the network rather than by the sender or receiver, thus ameliorating the problem of implosion at the sender and reducing sensitivity to the quality of network links to the receiver.

According to the present invention there is also provided a method of multicasting data from a sender to first, second, third and fourth receivers through a network including first and second routers, the method comprising transmitting first and second data packet from said sender to said first, second, third and fourth receivers, detecting at said first, second, third and fourth receivers whether said first and second data packets are properly received, transmitting a first reception information signal from said first receiver to said first router by a first path, transmitting a second reception information signal from said second receiver to said first router by a second path, transmitting a third reception information signal from said third receiver to said first router by a third path, determining, at said first router, in dependence upon said first, second and third reception information signals, whether said first, second and third receivers require re-transmission of said first and second data packets and, if so, transmitting information relating to said first, second and third detection information signals to said second router, determining, at said second router, whether said fourth receiver requires re-transmission of said first and second data packets and, if not, instructing said first router to re-transmit appropriate data packets to said first, second and third receivers.

The method may further comprise transmitting a request for information relating to said data packet from said first router to an archive router and receiving at said first router information relating to said data packet.

The network may comprise a plurality of sub-networks.

According to the present invention there is also provided a method of operating a router, the method comprising receiving a first message comprising information relating to receipt of a data packet by a first receiver, receiving a second message comprising information relating to receipt of a data packet by a second receiver, determining in dependence upon said first and second messages whether said first and second receivers require re-transmission of said data packet and, if so, transmitting a third message relating to receipt of said data packet by said first and second receivers to another router and receiving an instruction from said other router to retransmit said data packet to said first and second receivers.

According to the present invention there is still further provided a method of operating a network element, the method comprising receiving a first message from a first network element comprising information relating to receipt of a data packet by a first receiver, determining whether a second message from a second network element comprising information relating to receipt of said data packet by a second receiver has been received and if not, instructing said first network element to re-transmit said data packet, if so, transmitting a third message relating to receipt of said data packet by said first and second receivers to third network element and receiving an instruction from said third network element to re-transmit said data packet to said first and second network elements.

According to the present invention there is still further provided a method of operating a network element, the method comprising receiving a first message from a first network element comprising a first set of information relating to a plurality of data packets, determining whether a second message from a second network element comprising a second set of information relating to said plurality of data packets has been received and if not, instructing said first network element to retransmit one or more of said plurality of data packets in dependence upon said first set of information, if so, in dependence upon said first and second sets of information, determining the number data packets common to both first and second sets that are required for re-transmission and determining whether this number exceeds a predetermined number and if the number does not exceed the predetermined number, instructing said first network element to re-transmit one or more of said plurality of data packets in dependence upon said first set of information and instructing said second network element to re-transmit one or more of said plurality of data packets in dependence upon said second set of information, if the number does exceed the predetermined number, transmitting a third message relating to said first and second sets of information to third network element and receiving an instruction from said third network element to re-transmit one or more of said plurality of data packets in dependence upon said first and second sets of information.

According to the present invention there is also provided a router comprising means for receiving a first message comprising information relating to receipt of a data packet by a first receiver, means for receiving a second message comprising information relating to receipt of a data packet by a second receiver, means for determining in dependence upon said first and second messages whether said first and second receivers require re-transmission of said data packet and means for transmitting a third message relating to receipt of said data packet by said first and second receivers to another router if said first and second receivers require re-transmission of said data packet and means for receiving an instruction from said other router to retransmit said data packet to said first and second receivers.

According to the present invention there is also provided a system for multicasting data from a sender to first, second and third receivers through a network including first and second routers, comprising a first router including an input to receive a first reception information signal relating to whether said data packet is properly received by said first receiver and a second reception information signal relating to whether said data packet is properly received by said second receiver, a processor to determine in dependence upon said first and second reception information signals, whether said first and second receivers require re-transmission of said data packet and an output to transmit information relating to said first and second detection information signals to said second router and a second router including an input to receive said information from the first router and a third reception information signal relating to whether said data packet is properly received by said third receiver, a processor to determine whether said third receiver requires re-transmission of said data packet and an output to transmit an instruction to said first router to re-transmit said data packet to said first and second receivers.

According to the present invention there is also provided a system for multicasting data from a sender to first, second and third receivers through a plurality of networks including first and second routers, comprising a first router including an input to receive a first reception information signal relating to whether said data packet is properly received by said first receiver and a second reception information signal relating to whether said data packet is properly received by said second receiver, a processor to determine in dependence upon said first and second reception information signals, whether said first and second receivers require re-transmission of said data packet and an output to transmit information relating to said first and second detection information signals to said second router and a second router including an input to receive said information from the first router and a third reception information signal relating to whether said data packet is properly received by said third receiver a processor to determine whether said third receiver requires re-transmission of said data packet and an output to transmit an instruction to said first router to re-transmit said data packet to said first and second receivers.

According to the present invention there is also provided a computer program comprising computer code to make data processing apparatus receive a first message comprising information relating to receipt of a data packet by a first receiver, to receive a second message comprising information relating to receipt of a data packet by a second receiver to determine in dependence upon said first and second messages whether said first and second receivers require retransmission of said data packet and to transmit a third message relating to receipt of said data packet by said first and second receivers to a router if said first and second receivers require re-transmission of said data packet and to receive an instruction from said router to retransmit said data packet to said first and second receivers.

Embodiments of the present invention will now be provided, by way of example, with reference to the accompanying drawings in which:-
Figure 1 is a schematic representation of a multicast system;
Figure 2 is a more detailed schematic representation of the system shown in Figure 1;
Figure 3 is a general process flow diagram of a method of multicasting according to the present invention;
Figure 4 is a schematic representation of a first configuration of a sub-network;
Figure 5 is a schematic representation of a second configuration of a sub-network;
Figure 6 is a timing chart for signals transmitted according to the method of multicasting shown in Figure 3;
Figure 7 is a sequence diagram showing steps involved in local recovery according to the method of multicasting shown in Figure 3;
Figure 8 illustrates a first example of a process by which a router is chosen to become a local group controller;
Figure 9 illustrates a second example of a process by which a router is chosen to become a local group controller with a first set of reception states;
Figure 10 illustrates a second example of a process by which a router is chosen to become a local group controller with a second set of reception states;
Figure 11 illustrates an example of a process by which a router is chosen to become a local group controller for two local groups;
Figure 12 is a schematic diagram showing the transfer of data frames between routers each having a cache;
Figure 13 is a timing chart showing the duration for which a router may be chosen to be a local group controller in order to achieve system stability ;
Figure 14 is an example of a local group definition;
Figure 15 shows how the local group shown in Figure 14 is addressed;
Figure 16 is a schematic diagram of a specific example of a mobile network and a moving terminal;
Figure 17 is a schematic diagram of a general example of a mobile network and a moving terminal;
Figure 18 is sequence diagram showing, for a first case, first circumstance, the transfer of signals between a mobile terminal and other network elements;
Figure 19 is sequence diagram showing, for a first case, second circumstance when a local group has been established, the transfer of signals between a mobile terminal and other network elements;
Figure 20 is sequence diagram showing, for a first case, second circumstance when no local group has been established, the signals between a mobile terminal and other network elements;
Figure 21 is sequence diagram showing, for a first case, third circumstance, the transfer of signals between a mobile terminal and other network elements;
Figure 22 is sequence diagram showing, for a first case, fourth circumstance when a mobile terminal moves within the same local group, the transfer of signals between the mobile terminal and other network elements;
Figure 23 is sequence diagram showing, for a first case, fourth circumstance when a mobile terminal moves to a different local group or to an area where there is no local group, the transfer of signals between the mobile terminal and other network elements;
Figure 24 is sequence diagram showing, for a second case the transfer of signals between a mobile terminal and other network elements;
Figure 25 is sequence diagram showing, for a second case the transfer of signals between a mobile terminal and other network elements;
Figure 26 is schematic representation of a layer model for the multicast system;
Figure 27a is a schematic representation of a first frame structures used in multicasting;
Figure 27b is a schematic representation of a second frame structures used in multicasting;
Figure 28 is a schematic representation of the structure of a multicast transport frame;
Figure 29 shows examples of the structure of a multicast transport data frame;
Figure 30 is a schematic representation of a router;
Figure 31 is a schematic representation of a border router;
Figure 32 is a schematic representation of a mobile terminal;
Figure 33 is a process flow diagram for choosing a local group controller as shown in Figure 8;
Figure 34 is a process flow diagram for choosing a local group controller as shown in Figures 9 and 10;
Figures 35a and 34b are a process flow diagrams of the operation of a router with caches shown in Figure 12;
Figures 36 is a process flow diagram of the operation of a router to achieve system stability as shown in Figure 13;
Figure 37 is a process flow diagram of the operation of a mobile terminal;
Figure 38 is a process flow diagram of the operation of a moving terminal;
Figure 39 is a process flow diagram of the operation of a new lowest level router and
Figure 40 is a process flow diagram of the operation of an old local group controller.

### Multicast system structure

### Network structure

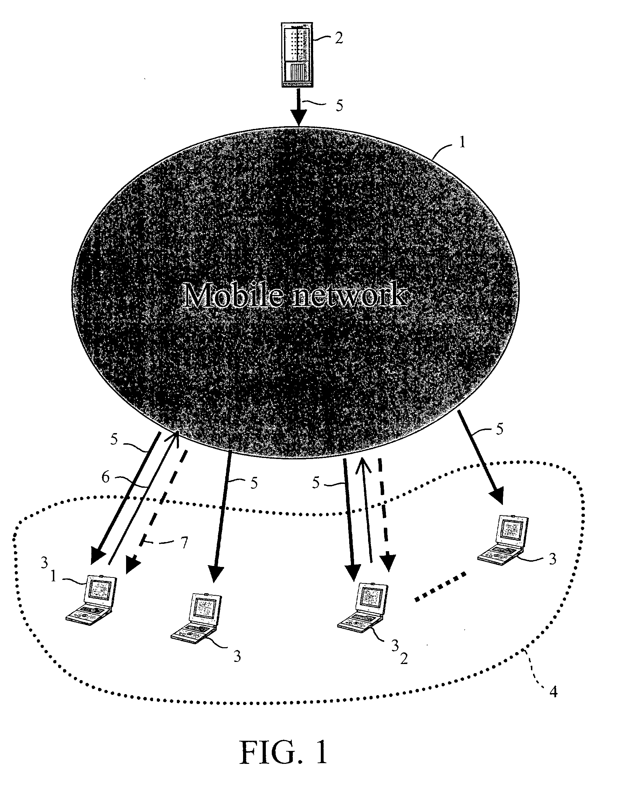

Referring to Figure 1, a multicast system comprises a mobile network 1, a sender 2 and a plurality of mobile terminals 3 which form a multicast receiver group 4. In this example, the sender 2 may be a desktop personal computer and the mobile terminals 3 may be laptop computers. Reliable multicast transmission generally comprises three stages. In the first stage, known as initial transmission, the sender 2 transmits data 5, via the mobile network 1, to the mobile terminals 3 using a multicast group address. In the second stage, known as acknowledgement, the mobile terminals 3 return state of reception messages 6 to the mobile network 1 to indicate success or failure of the initial transmission. In this example, first and second mobile terminals 3₁, 3₂ do not successfully receive the data 5 and return "not acknowledged" messages (NACKs) to the mobile network 1. In the last stage, known as recovery, the mobile network 1 retransmits the missing data 7 to the first and second terminals 3₁, 3₂. In this way, high reliability of transmission is achieved.

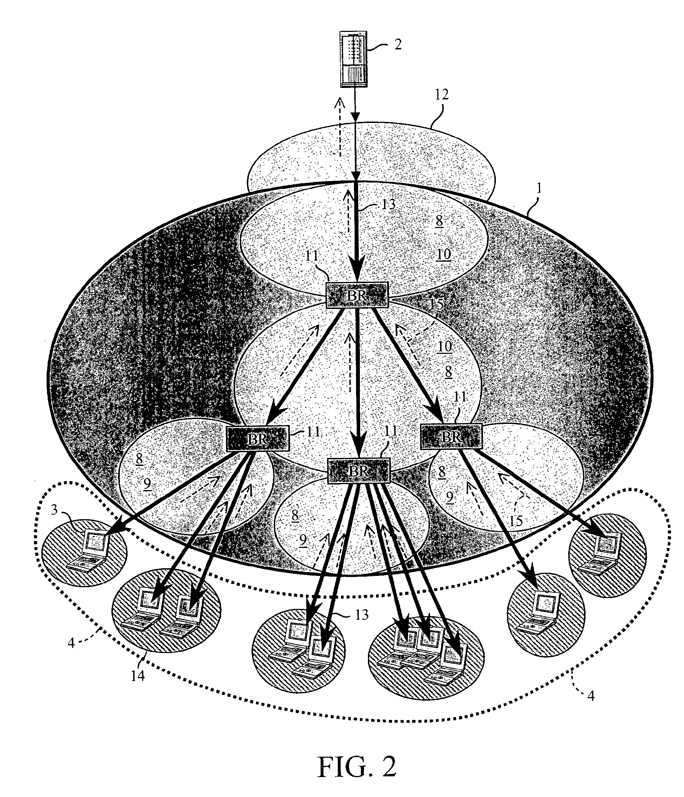

Referring to Figure 2, the structure of the multicast system is described in greater detail. The mobile network 1 comprises a plurality of sub-networks (SN) 8 including leaf sub-networks 9, to which mobile terminals 3 are connected, and transit sub-networks 10, which connect the leaf sub-networks 9 to the sender 2. Each sub-network 8 is connected to another sub-network 8 through a border router (BR) 11. The border router 11 may be implemented in dedicated hardware or in a personal computer (PC). It may have a processor which is programmable and which implements certain functions. Each border router 11 serves as a multicast archiver (MA), which stores multicast data and addresses. The structure and function of border routers 11 will be described in more detail later.

The sender 2 transmits multicast data 5 to the mobile network 1 through an access network 12, which may be a wire or wireless network. The multicast data 5 is transmitted to a plurality of mobile terminals 3 via border routers 11 on a multicast tree 13. The multicast tree 13 is formed using multicast protocols including the Internet Engineering Task Force (IETF) standard protocol, Protocol Independent Multicast (PIM), Distance Vector Multicast Routing Protocol (DVMRP), Multicast Extensions to Open Shortest Path First (MOSPF) and Multicast Border Gateway Protocol (MBGP). It will be appreciated that other protocols which set up or help set up the multicast tree 13 may also be used. The multicast data 5 reaches the mobile terminals 3 though radio channels provided through radio cells 14.

If errors are detected in the data 5 at the mobile terminals 3, recovery is carried out within the sub-networks 8. Recovery reports 15 are generated and these are summarised at each border router 11 so that a single summary is returned to the sender 2. Recovery, recovery reporting and report summarising are described in more detail later.

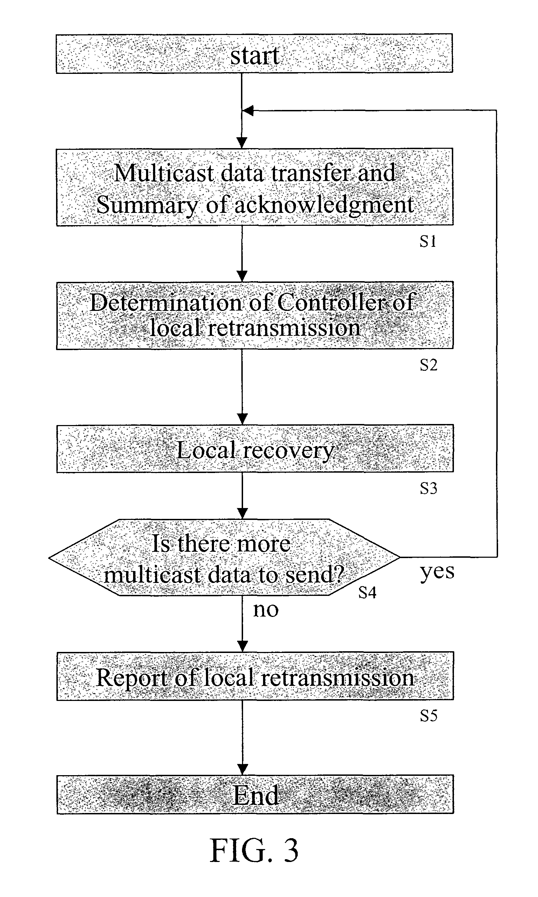

Referring to Figure 3, a general process flow diagram shows an outline of a method of reliable multicasting data from the sender 2 to the mobile terminals 3.

The sender 2 multicasts data 5 to a plurality of mobile terminals 3 (step S1). Mobile terminals 3 that receive packets of data with errors return a state of reception message 6. Routers (not shown) within the sub-network 8 are chosen as controllers depending on the state of reception messages 6. The controllers manage recovery for a group of mobile terminals 3 (step S2). The group of mobile terminals 3, together with routers linking them to the controllers, is known as a local group and the controller in charge of recovery is known as the local group controller. Each controller carries out retransmission for its local group (step S3). This is known as local recovery. If there is more data to send, then steps S1 to S3 are repeated (step S4). Otherwise each controller reports the result 15 of local recovery to sender 2 (step S5).

### Sub-network 8 structure

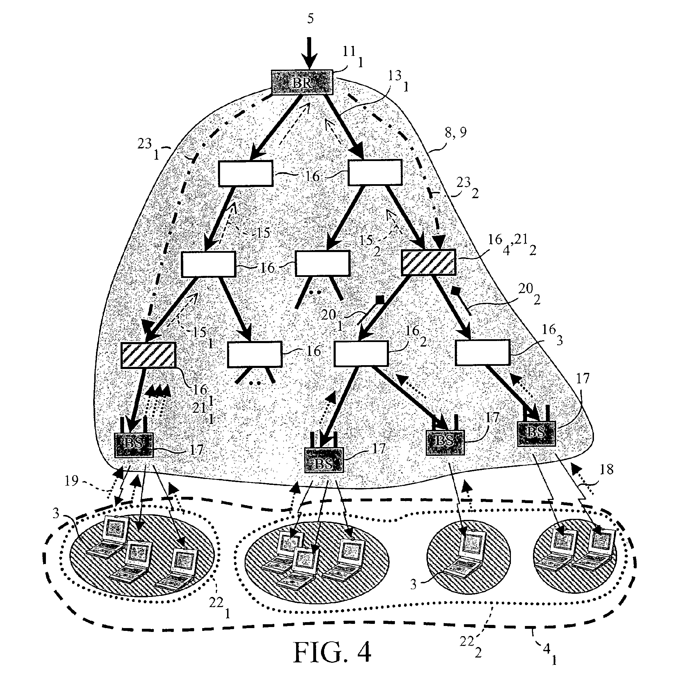

Referring to Figure 4, a first example of a configuration of a sub-network 8, in particular a leaf sub-network 9, which receives multicast data 5 from the mobile network 1 is shown.

A plurality of mobile terminals 3 are located in radio cells 14 and are connected to the sub-network 8. The sub-network 8 comprises a plurality of routers 16 arranged on a first multicast tree 13₁ and a plurality of base stations (BSs) 17 which transmit multicast data 5 to the mobile terminals 3 over a plurality of radio links 18. The routers 16 may be implemented in dedicated hardware or in PCs.

Data 5 is multicast to the mobile terminals 3, which form a multicast group 4₁.
Each mobile terminal 3 responds with a signal indicating whether or not it correctly received the multicast data 5. The signal may comprise an "acknowledge" message (ACK) (not shown) or a "not acknowledged" message (NACK) 19 and such a signal may be returned for every block or frame of data.

The NACK messages 19 are gathered by the lowest level routers 16, in this example first, second and third routers 16₁, 16₂, 16₃. Each of the lowest level routers 16₁, 16₂, 16₃ decides whether it should become the local group controller based upon the number of NACK messages 19 received. If a lowest level router 16₁, 16₂, 16₃ decides that it should not be the local group controller, it generates a summary 20 of the NACK messages 19 and sends the summary 20 to a higher level router 16. In this example, the second and third routers 16₂, 16₃ send first and second summaries 20₁, 20₂ to a higher level router 16, in this example a fourth router 16₄. The higher level router 16₄ determines whether it should become the local group controller. If it decides that it should not be the local group controller, the higher level router 16₄ generates a new summary 20 and sends the new summary 20 to a still higher level router 16. This process continues until a router 16 decides that it should become the local group controller. The decision process will be described in more detail later.

In this example, the first and fourth routers 16₁, 16₄ are selected as first and second local group controllers 21₁, 21₂ and they take control of local recovery for first and second local groups 22₁, 22₂ respectively.

The first local group controller 21₁ organises the first local group 22₁. To form the first local group 22₁, the first local group controller 21₁ receives a first bundle of data 23₁ which will be referred to hereinafter as first definition information 23₁ from a first border router 11₁ connecting the sub-network 8 with the rest of the mobile network 1. The first bundle of data 23₁ comprises a local group address, recovery software and the data frames required for retransmission. The first local group controller 21₁ informs the mobile terminals 3 within the first local group 22₁ of their group identity. The first local group controller 21₁ then executes recovery. Finally, the first local group controller 21₁ sends a first recovery report 15₁ to the first border router 11₁. The second local group controller 21₂ performs a similar set of steps in respect of the second local group 22₂.

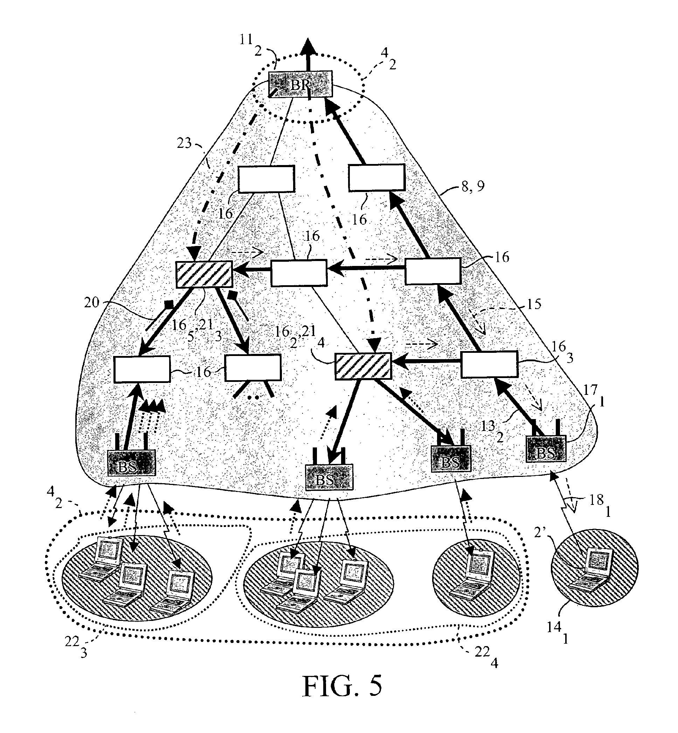

Referring to Figure 5, a second example of a configuration of the sub-network 8 is shown. The second configuration differs from the first configuration in that the sender 2' is mobile and is connected to the sub-network 8. Thus, rather than receiving multicast data 5 from the mobile network 1, the sub-network 8 transmits the multicast data 5 to the rest of the mobile network 1.

The mobile sender 2' is located in a first radio cell 14₁ and transmits multicast data 5 to a first base station 17₁ over a first radio link 18₁. A second multicast tree 13₂ is formed as shown in Figure 5. Data 5 is multicast to a second multicast receiver group 4₂, which includes a second border router 11₂.

The process of acknowledgement and recovery is similar to that described in the first configuration, with two notable exceptions. Firstly, in this configuration, a fifth routers 16₅ and the second router 16₂ become third and fourth local group controllers 21₃, 21₄ respectively. Secondly, as stated earlier, the second border router 112 forms part of the second multicast receiver group 4₂. Despite this and despite the fact that the mobile sender 2' is connected to the sub-network 8, the second border router 11₂ still serves as the multicast archiver and provides the local group controllers 21 with the information 23 necessary for recovery. Neither the mobile sender 2', nor the closest router 16 to it, i.e. the third router 16₃, serve as the multicast archiver. However, it will be appreciated that the mobile sender 2' or the third router 16₃ could serve as the multicast archiver.

In a preferred embodiment, if the local group controllers 21 do not recover errors within a predetermined period of time due to, for example, deterioration of radio channel quality or network congestion, then they may retransmit data 5 at a later time and return a report to higher level routers 16 that recovery was successful. This is known as delayed recovery strategy.

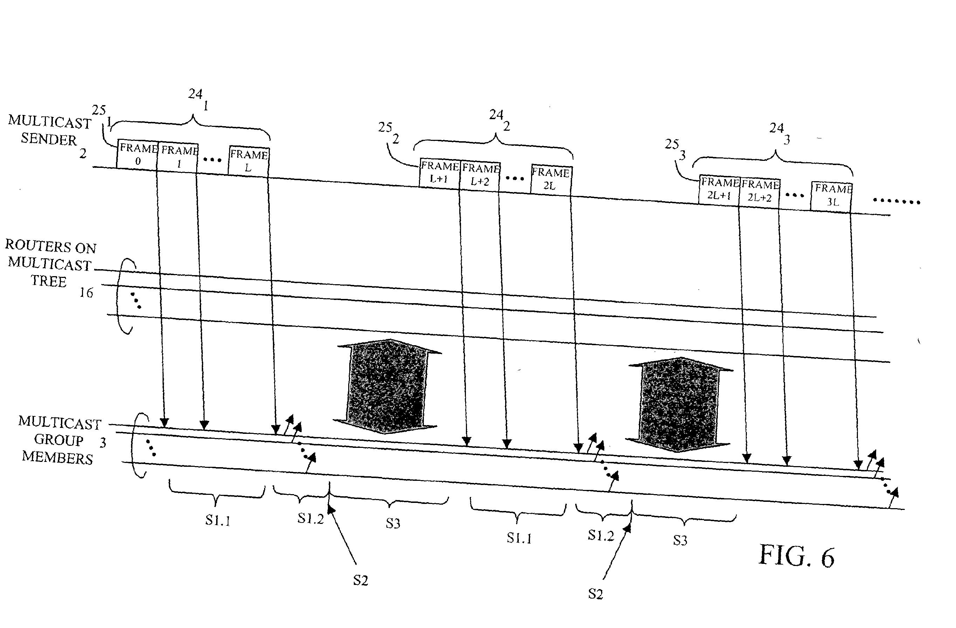

Referring to Figure 6, a multicast timing chart is shown. The multicast data 5 is divided into blocks 24, which are in turn divided into frames 25. During initial transmission of a first block of data 24₁, the sender 2 transmits a sequence of frames 25₁, which are conveyed via routers 16 on the multicast tree 13 to mobile terminals 3 forming part of the multicast group 4 (step S1.1). The mobile terminals 3 return acknowledge messages 19, which may be subsequently summarised (step S1.2). Steps S1.1 and S1.2 correspond to step S1 in Figure 3. The routers 16, beginning with the lowest level routers, execute an algorithm to determine whether they should become a local group controller 21 (step S2). Once a local group controller 21 has been chosen, local recovery may proceed (step S3). This completes multicast transmission for the first block of data 24₁ and transmission of second block begins 24₂.

### Recovery process

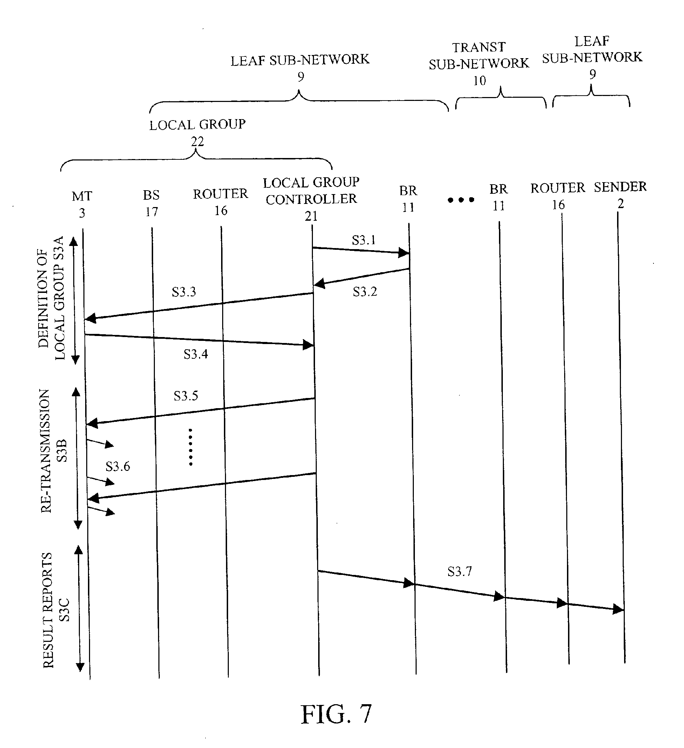

Referring to Figure 7, the recovery process is described in more detail. The recovery process comprises three stages, namely definition of the local group (step S3A), retransmission (step S3B) and reporting of recovery result process (step S3C).

In the first stage S3A, definition of the local group, the local group controller 21 requests and receives definition information 23 from the border router 11 (steps S3.1 and S3.2). The local group controller 21 transmits the identity of the local group 22 to mobile receivers 3 within the local group 22 (step S3.3). The mobile receivers 3 confirm to the local group controller 21 that they have received the local group identity and that they are a member of the local group (step S3.4).

In the retransmission stage S3B, the local group controller 21 sequentially retransmits requested frames 25 (step S3.5) and the mobile terminals 3 send acknowledge messages 19 (step S3.6). The frames may be retransmitted by unicast, multicast or broadcast.

In the result reporting stage S3C, the local group controller 21 sends to the sender 2 a report 15 of the result of local recovery (step S3.7). As the report 15 is transmitted to the sender 2 through transit sub-networks 10, the report is summarised.

### Choosing a router 16 to becomes a local group controller 21 - Example 1

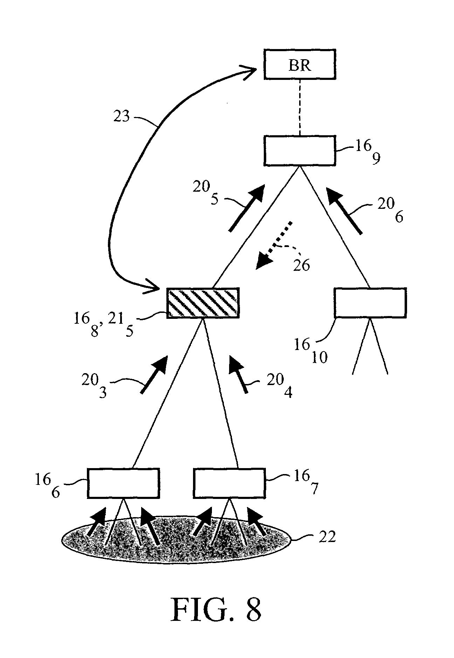

Referring to Figure 8, a first example of a decision process by which a router 16 is chosen to become a local group controller 21 is shown with reference to part of the sub-network 8.

Sixth and seventh routers 16₆, 16₇ generate third and fourth summaries 20₃, 20₄ of reception states and pass them to an eighth, higher level router 16₈. The third and fourth summaries 20₃, 20₄ of reception states are in the form of a sequence of numbers of error frames. In this example, the third summary 20₃ lists frames numbers 2, 3, 5, 6, 7 and 8, hereinafter expressed in the form {2, 3, 5, 6, 7, 8} and the fourth summary 20₄ lists {1, 3, 5, 6}. The eighth router 16₈ compares the third and fourth summaries 20₃, 20₄ for coincidences. In this example, both summaries 20₃, 20₄ list {3, 5, 6}, thus there are three coincidental frame numbers. The eighth router 16₈, checks whether the number of coincidental frames exceeds a predetermined threshold, in this example set at one. If the number of coincidental frames exceeds the threshold, then a fifth summary 20₅ is generated and passed on to a ninth, higher level router 16₉. In this example, the fifth summary 20₅ lists the sequence of error frames present in either the third and fourth and second summaries 20₃, 20₄, namely {1, 2, 3, 5, 6, 7, 8}.

In the same way, the ninth router 16₉ compares the fifth summary 20₅ with a sixth summary 20₆ received from a tenth, lower level router 20₁₀. In this example, the fourth summary 20₄ contains no frame numbers, i.e. {nothing}. The ninth router 16₉ finds no coincidental frame numbers. Thus, the number of coincidental frames falls below the threshold of one. Therefore, the ninth router 16₉ designates the eighth router 16₈ as the local group controller 21 by transmitting an instruction of proxy 26. The eighth router 16₈ becomes the fifth local group controller 21₅ and it manages local recovery. Local recovery includes requesting and receiving a bundle of information 23 from the border router 11 and defining the local group 22 which originally transmitted reception states 6 from which the third and fourth summaries 20₃, 20₄ were produced. It will be appreciated that the sixth and seventh routers 16₆ 16₇ will have generated summaries third and fourth summaries 20₃, 20₄ of reception states either from summaries they themselves received from lower level routers 16 or from reception states 6 received from base stations 17.

### Choosing a router 16 to become a local group controller 21 - Example 2

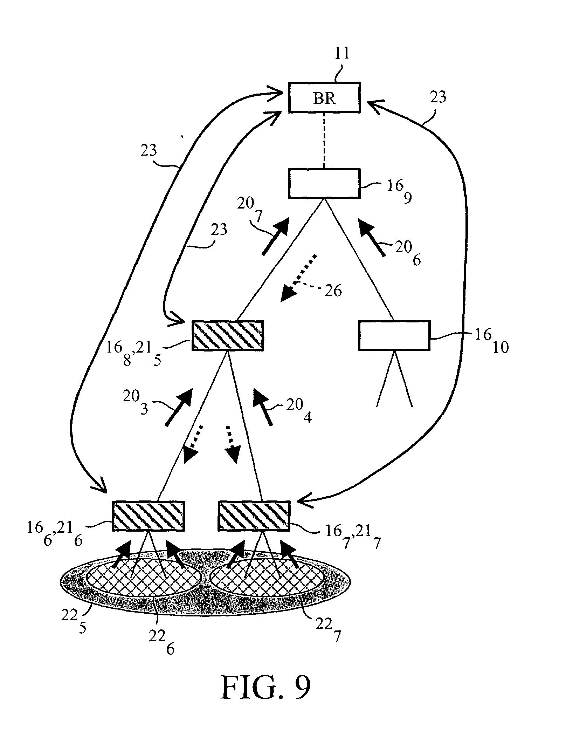

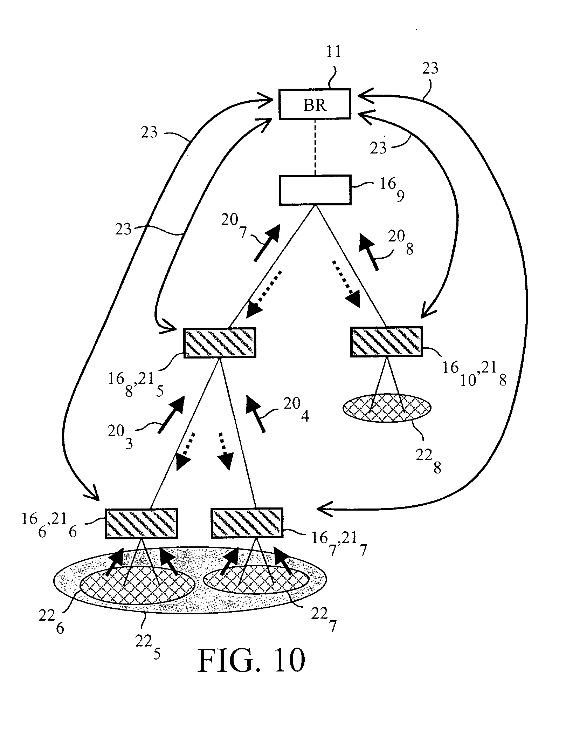

Referring to Figures 9 and 10, a second example of a process by which one or routers are chosen to become local group controllers 21 is shown with reference to the same part of the sub-network 8. The second example is similar to the first except that more than one local group controllers 21 are chosen and more than one local groups 22 are established. This helps to reduce the retransmission traffic.

Referring to Figure 9, the eighth router 16₈ receives the third and fourth summaries 20₃, 20₄ from the sixth and seventh routers 16₆, 16₇. Instead of generating the fifth reception state summary 20₅ which includes error frames present in either the third and fourth summaries 20₃, 20₄, the eighth router 16₈ produces a seventh reception state summary 20₇ which lists only the coincidental frames, namely {3, 5, 6}. The eighth router 16₈ send the seventh reception state 20₇ summary to the ninth router 16₉, which compares it with the sixth reception state summary 20₆. The ninth router 16₉ does not find any coincidences and so instructs the eighth router 16₈ to become the third local group controller 20₃ in charge of retransmission of frames {3, 5, 6}. The eighth router 16₈ delegates responsibility for retransmission of the remaining frames to the routers 16 which returned summaries 20 with the error frames. Thus, eighth router 16₈ instructs sixth and seventh routers 16₆, 16₇ to become sixth and seventh local group controllers 21₆, 21₇ in charge of retransmission of frames {2, 7, 8} and {1, 9} respectively.

In summary, the fifth, sixth and seventh local group controllers 21₅, 21₆, 21₇ are in charge of retransmission of frames {3, 5, 6}, {2, 7, 8} and {1, 9} for fifth, sixth and seventh local groups 22₅, 22₆, 22₇.

Referring to Figure 10, the same procedure is applied to a different set of reception state summaries 20. The tenth router 16₁₀ returns an eighth reception state summary 20₈ of {2, 7}. Thus, the ninth router 16₉ compares the seventh and eighth reception state summaries 20₇, 20₈ and finds there is no coincidence between them. Therefore, the ninth router 16₉ instructs the eighth and tenth routers 16₈, 16₁₀ to become fifth and eighth local group controllers 21₅, 21₈ respectively for recovery of frames {3, 5, 6} and {2, 7} for fifth and eighth local groups 22₅, 22₈. The sixth and seventh routers 16₆, 16₇ take charge of retransmission of frames, {2, 7, 8} and {1, 9}.

### Choosing a router 16 to become local group controller 21 for more than one local group 22

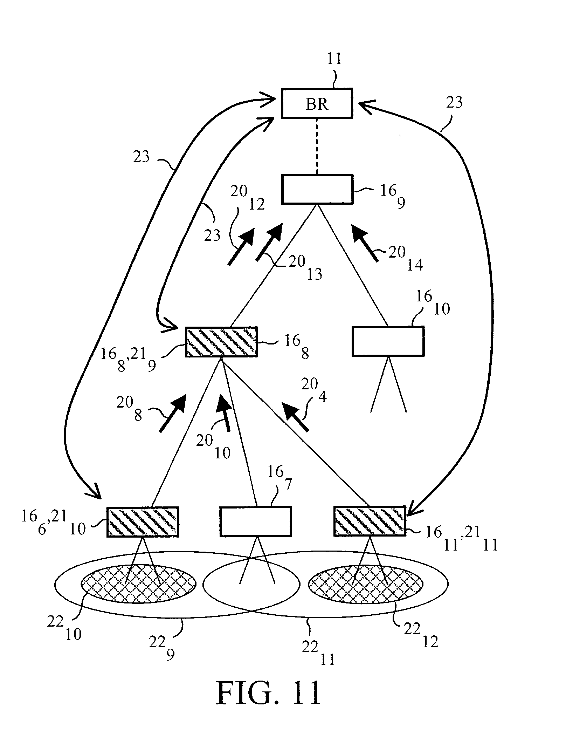

Referring to Figure 11, an example of a process by which a router 16 is chosen to become a local group controller 21 for more than one local group 22 is shown with reference to part of the sub-network 8. This example is similar to the first example, except for the addition of an eleventh router 16₁₁ and a new set of reception state summaries 20.

The sixth, seventh and eleventh routers 16₆, 16₇, 16₁₁ generate ninth, tenth and eleventh summaries 20₉, 20₁₀, 20₁₁ of reception states and passed them on to the eighth, higher level router 16₈. In this, example the ninth summary 20₉ lists {1, 3, 6, 7}, the tenth summary 20₁₀ lists {1, 3, 8, 9} and the eleventh summary 20₁₁ lists {2, 8, 9}. The eighth router 16₈ compares the ninth, tenth and eleventh summaries 20₉, 20₁₀, 20₁₁ for coincidences. In this example, there are coincidences between the ninth and tenth summaries 20₉, 20₁₀, namely {1, 3}, while there are coincidences between tenth and eleventh summaries 20₁₀, 20₁₁, namely {8, 9}. The eighth router 16₈ checks whether the number of coincidental frames exceed the threshold of one coincidence and generates twelfth and thirteenth summaries 20₁₂, 20₁₃, one for each set of coincidences, which are passed on to the ninth, higher level router 16₉. In this example, the twelfth summary 20₁₂, lists {1, 3} and the thirteenth summary 20₁₃ lists {8, 9}.

The ninth router 16₉ compares the twelfth summary 20₁₂ with a fourteenth summary 20₁₄ received from the tenth router 16₁₀. In this example the fourteenth summary 20₁₄ lists no error frame numbers and so the ninth router 16₉ finds no coincidental frames. Therefore, the ninth router 16₉ designates the eighth router 16₈ as a ninth local group controller 21₉ in charge of recovery of {1, 3} for a ninth local group 22₉. In turn, the eighth router 16₈, instructs the sixth router 16₆ to become an tenth local group controller 21₁₀ in charge of recovery of {6, 7} for an tenth local group 22₁₀.

In the same way, the ninth router 16₉ compares the thirteenth summary 20₁₃ with the fourteenth summary 20₁₄ and finds no coincidental frames. Therefore, the ninth router 16₉ designates the eighth router 16₈ as a local group controller 21 in charge of recovery of {8, 9} for an eleventh local group 20₁₁. In turn, the eighth router 16₈, instructs the eleventh router 16₁₁ to become an eleventh local group controller 21₁₁ in charge of recovery of {2} in a twelfth local group 22₁₂.

Thus, the eighth router 16₈ serves as local group controller for two different local groups, namely the ninth and eleventh local groups 22₉, 22₁₁.

### Routers with caches

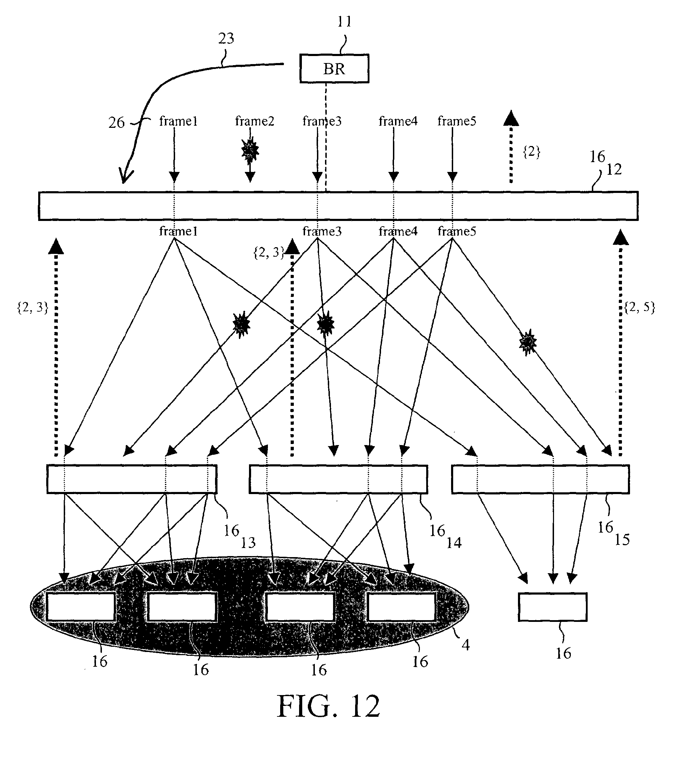

Referring to Figure 12, each router 16 has a cache for storing data and recovery software. Each router 16 stores a block of data 24 as it receives it and erases it when the data block 24 is correctly transmitted to lower routers 16. If the lowest level routers 16 receive the data blocks correctly, then they take care of local recovery for mobile terminals 3. However, if any frame errors are introduced as the data propagates through levels of router, the highest router 16 which is not in error carries out local recovery for routers 16 below it.

In this example, a single block of data 24 comprises five frames 25₄. Errors occur in frames 2, 3 and 5 as shown in Figure 11. Therefore, an twelfth router 16₁₂ receives an erroneous frame 2 and requests retransmission of frame 2 to a higher level router (not shown). As frames 25₄ are correctly received, the twelfth router 16₁₂ relays them to lower level routers 16. Thirteenth and fourteenth routers 16₁₃, 16₁₄ receive erroneous frames 2 and 3 and request their retransmission. A fifteenth router 16₁₅ receives erroneous frames 2 and 5 and requests retransmission of these frames.

The twelfth router 16₁₂ multicasts frame 2 to all of lower routers once it receives frame 2 from a higher router (not shown). The twelfth router 16₁₂ defines a new local multicast group 22 for recovery of frame 3. However, the twelfth router 16₁₂ sends frame 5 by unicast, instead of multicast, because only one router, namely the fifteenth router 16₁₅ requests retransmission.

Every router 16 acknowledges the state of reception 6 to a higher level router as soon as it receives frames correctly. Every router 16 removes the frames which are sent correctly to all of lower routers 16 from its cache, while keeping the frames that are incorrectly transmitted. The advantage of this arrangement is that there is no need to obtain retransmission of already correctly transmitted frames from the border router 11, thus reducing the amount of network traffic.

### System stability

The process of determining which routers 16 become local group controllers 21 occurs after transmission of every block 24. However, this may lead to instability in the system if routers 16 switch this often. To overcome this problem, routers 16 may be configured such that once one becomes a local group controller 21, it continues to do so for a given period. Thus, the local group controller 21 holds the recovery module, which is the software necessary for recovery, together with information for local group definition, information for local group management and retransmission frames for a period of several blocks. This has the advantages of reducing traffic between the local group controller 21 and the border router 11 and of reducing the frequency with which the local group controller 21 changes.

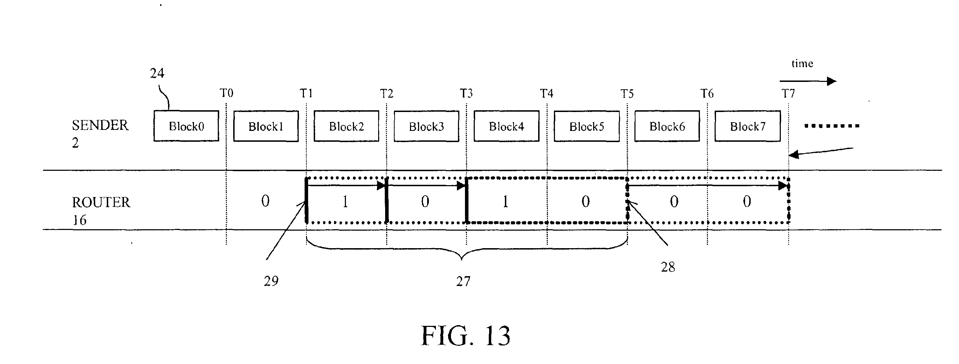

Referring to Figure 13, once a router 16 is selected as a local group controller 21 it continues to be selected for a given period, for example a period equivalent to four blocks of data. Once the router 16 becomes a local group controller 21 after block 1 at a time T1, it organises a new local group 22 and keeps the information for the local group and recovery module at least until a time T5. This period of time is called a local group controller continuation period 27. If in the meantime, for example at time T3, the router 16 is again chosen as a local group controller is the same as that of time T1, then the continuation period 27 is refreshed by another 4 blocks, i.e. until time T7. Until the time T3, continuation period 27 shrinks to 2 blocks because the right edge 28, the end of the continuation period 27, does not shift. However, at time T3 the continuation period 27 is restored to 4 blocks and the right edge 28 moves from time T5 to time T7. Once the left edge 29 of the continuation period 27 reaches the right edge 27, then the router 16 is no longer the local group controller 21.

### Definition of local group

The method of multicasting according to the present invention uses two kinds of groups. The first is a multicast group for initial transmission and second is a local group for recovery.

The multicast group 4 and multicast tree 13 are organised by routers 16 according to Internet Group Management Protocol (IGMP). Mobile terminals 3 may become a member or leave the multicast group 4 by transmitting join and leave messages respectively. The lowest level router 16 periodically sends a multicast group message comprising multicast group information. If a mobile terminal 3 receives this message and wants to join the multicast group, it responds with a JOIN message. If the mobile terminal 3 wants to leave the multicast group, it sends a LEAVE message to the lowest level router.

The local group is defined according to a block number B and session number S.

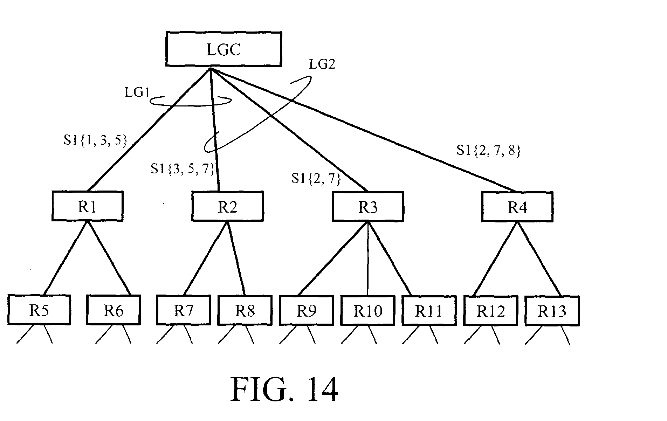

Referring to Figure 14, an example of a local group definition is shown. In this example, a twelfth local group controller LGC defines thirteenth and fourteenth local groups LG1, LG2. A sixteenth router R1 belongs to the thirteenth local group LG1, a seventeenth router R2 belongs to both local groups LG1, LG2, while eighteenth and nineteenth routers R3, R4 belong to the fourteenth local group LG2. Errors occur at routers R5-R9, R11-R13, but not at R10. The thirteenth and fourteenth local groups LG1, LG2 are defined at the twelfth local group controller LGC as follows:
LG1 : {LG1 address, (B1,S1) | (R1,R2)}
LG2 : {LG2 address, (B1,S1) | (R2,R3,R4)}

Each router defines, for example, as follows,
LG1 : {LG1 address, (B1,S1) | (R5 , R6)} at the sixteenth router R1
LG1 : {LG1 address, (B1,S1) | (R7, R8)} at the seventeenth router R2
LG2 : {LG2 address, (B1,S1) | (R7, R8)} at the seventeenth router R2
LG2 : {LG2 address, (B1,S1) | (R9, R11)} at the eighteenth router R3
LG2 : {LG2 address, (B1,S1) | (R12, R13)} at the nineteenth router R4

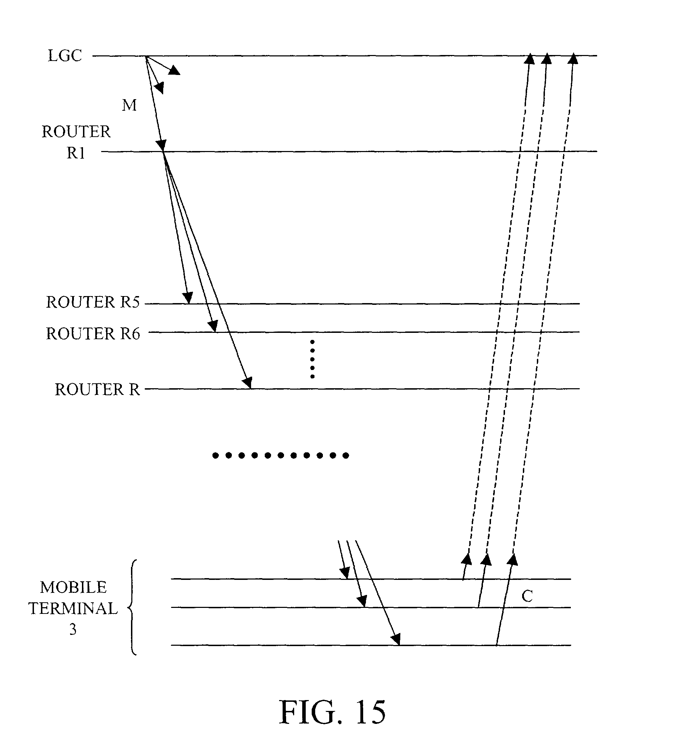

Referring to Figure 15, the process of organising the local groups for recovery is shown. The twelfth local group controller LGC multicasts a query message M for local group definition information to each local group, comprising a local group address LG_address, block number B, session number S and local group controller router address LGC_router_address, i.e. {LG_address, {B, S}, LGC_router_address}. The local group controller LGC sends a first message M1 to the sixteenth and seventeenth routers R1, R2, which in turn relay the first message M1 to lower level routers R5, R6, R7, R8. The local group controller LGC sends a second message M2 to the seventeenth, eighteenth and nineteenth routers R2, R3, R4 which in turn relay the second message M2 to lower level routers R7, R8, R9, R11, R12, R13 which returned error frame. The lowest routers in each local group relay the messages M1, M2 to the mobile terminals 3. Local group definition is completed by the mobile terminals 3 returning confirmation C of local group definition to the local group controller LGC. Thus, local multicast group trees for the thirteenth and fourteenth local groups LG1, LG2 are defined.

After local group definition, the local group controller LGC can carry out recovery with the new local group addresses.

If a mobile terminal 3 moves and attaches itself to a new local group 22, the local group controller address is required to tell a new lowest router 16 that the mobile terminal 3 was originally a member of another local group 22. This information is used to assist mobility.

### Mobility

### Network structure

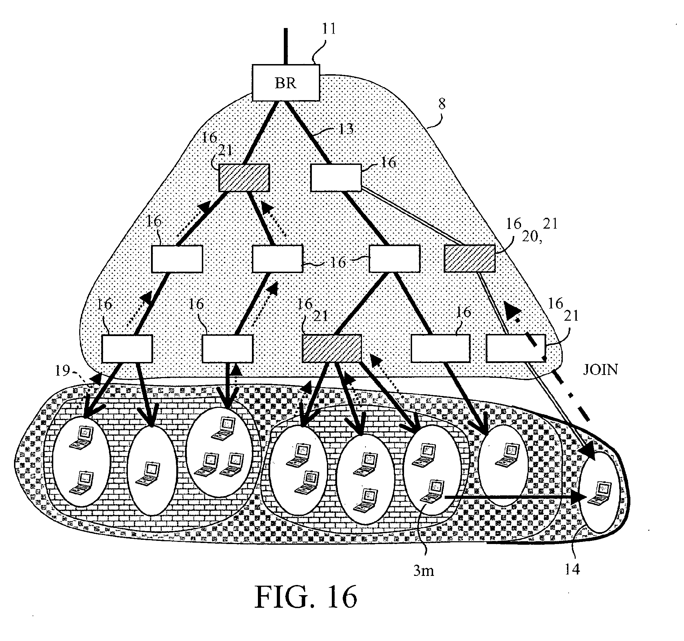

Referring to Figure 16, a moving mobile terminal 3_{M} moves to another radio cell 14 during multicasting. Twentieth and twenty-first routers 16₂₀, 16₂₁ maintain continuation of the multicast session. The sub-network 8 redefines the multicast tree 13 for the moving terminal 3_{M} so that the twentieth and twenty-first routers 16₂₀, 16₂₁ form part of the tree 13. The twentieth router 16₂₀ becomes a local group controller 21 and carries out recovery for the moving terminal 3_{M}.

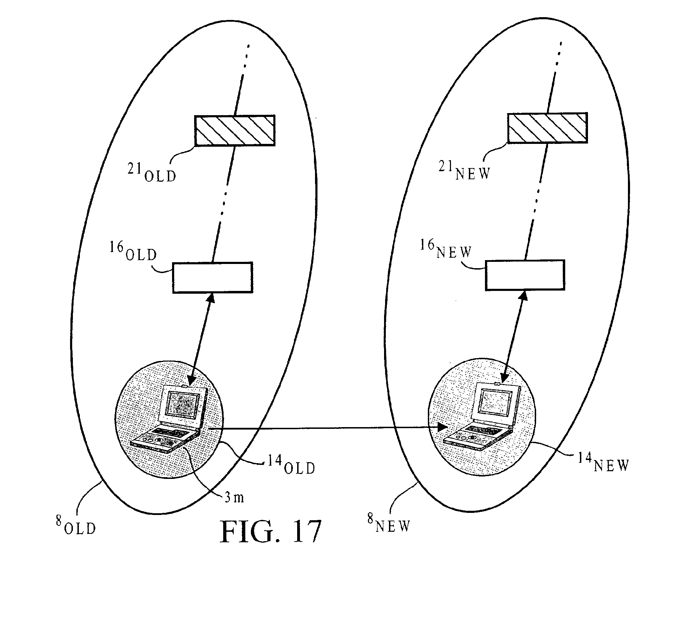

Referring to Figure 17, a method by which continuity of the multicast session is maintained will now be described.

In general terms, the network 1 comprises an original area 8_{OLD} in which the moving terminal 3_{M} is initially located and a destination area 8_{NEW} to which it moves. In the original area 8_{OLD}, the moving terminal 3_{M} is located in an old radio cell 14_{OLD} and is connected to the network 1, through an old lowest level router 16_{OLD}. An old local group controller 21_{OLD} takes charge of recovery for the moving terminal 3_{M}. In the destination area 8_{NEW}, the moving terminal 3_{M} is located in a new radio cell 14_{NEW} and is connected to the network 1, through an old lowest level router 16_{NEW}. A new local group controller 21_{NEW} takes charge of recovery for the moving terminal 3_{M}.

As soon as the moving terminal 3_{M} realises that it has moved from an old cell 14_{OLD} to new cell 14_{NEW}, it transmits a join message JOIN according to Internet Group Management Protocol (IGMP) RFC 1112 IETF Internet standard.

The manner in which the network 1 responds depends upon the final destination of the moving terminal 3_{M} and the timing of its move. There are two general cases. The moving terminal 3_{M} may move to a cell 14 connected to a new part of the network where the multicast tree 13 has already been established. Alternatively, the multicast tree 13 may not have been organised.

The response of the network 1 in each case will now be described.

### Multicast tree 13 already established in destination area 8_{NEW}

In the first case, when the multicast tree 13 has already been established in the destination area 8_{NEW}, the response of the network 1 further depends on whether routers 16 in the original and destination parts of the network 8_{NEW}, 8_{OLD} have executed the algorithm for determining whether they should become a local group controller 21.

Table 1 below, shows first, second, third and fourth circumstances A, B, C, D under which the moving terminal 3_{M} may move:

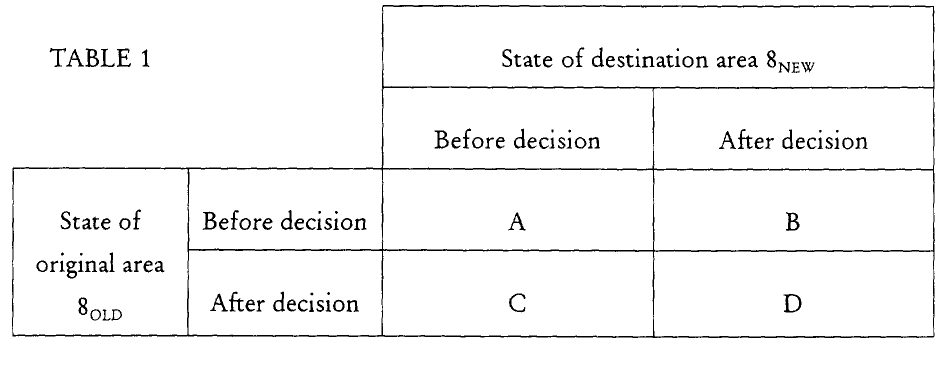

The network 1 response is governed by two rules. The first rule is that if the algorithm has not been executed in the original area 8_{OLD}, then the new lowest level router 16_{NEW} or the new local group controller 21_{NEW} in the destination area 8_{NEW} takes care of recovery for the moving terminal 3_{M}. The second rule is that if the algorithm has been executed in the original area 8_{OLD}, then an old local group controller 21_{OLD} in the original area 8_{OLD} takes care of recovery for the moving terminal 3_{M}.

### First circumstance A

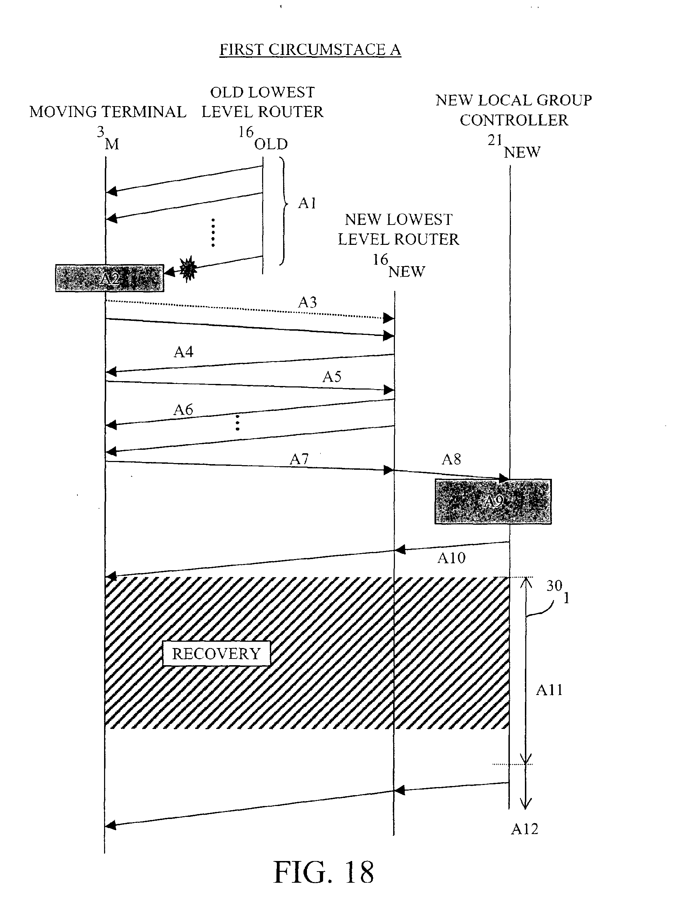

Referring to Figure 18, a multicasting sequence diagram for the first circumstance A is shown. In this case, the local group controller decision algorithm has not been executed in either the original or the destination parts of the network 8_{OLD}, 8_{NEW}.

The sender 2 multicasts a block of data 24 via an old lowest level router 16_{OLD} to the moving terminal 3_{M} located in the original area 8_{OLD} (step A1). The moving terminal 3_{M} moves to the new area 8_{NEW} while it receives multicast frames 25 of the data block 24 (step A2). When the moving terminal 3_{M} detects that it is in a new cell 14_{NEW}, it sends a join message JOIN, which includes a corresponding multicast group address but not a local group address (step A3). The new lowest level router 16_{NEW} of the destination area 8_{NEW} receives the message (step A4). The new lowest level router 16_{NEW} requests and receives the reception state 6 from the moving terminal 3_{M} (steps A5 & A6). The moving terminal 3_{M} receives the remaining frames of the data block 24 (step A7) and returns a reception state 6 (step A8). The reception state 6 is transmitted to the new lowest level router 16_{NEW}, which executes an algorithm to determine whether it should become a local group controller 21. The reception state 6 is transmitted to a higher level router 16 until a router 16 determines that the router 16 below it should becomes the new local group controller 21_{NEW} (step A9). Once the new local group controller 21_{NEW} has been selected, a new local group 22_{NEW} is defined and local recovery is carried out in the new area 8_{NEW} (step A10 & A11). A first timeout 30₁ is set for recovery and begins when the local group definition is transmitted. Multicast transmission of the next block of data 24 takes place via the new lowest level router 16_{NEW} (step A12).

### Second circumstance B

In the second circumstance B, when the moving terminal 3_{M} moves from the original area 8_{OLD} where the algorithm has not been executed to the destination area 8_{NEW} where the algorithm has been carried out, two situations B(1), B(2) can arise. In the first situation, a new local group 22_{NEW} is established in the destination area 8_{NEW}. In the second situation, no local group 22 is established in the destination area 8_{NEW}, even though the algorithm has been executed, because there are no errors have been returned and no local recovery is required.

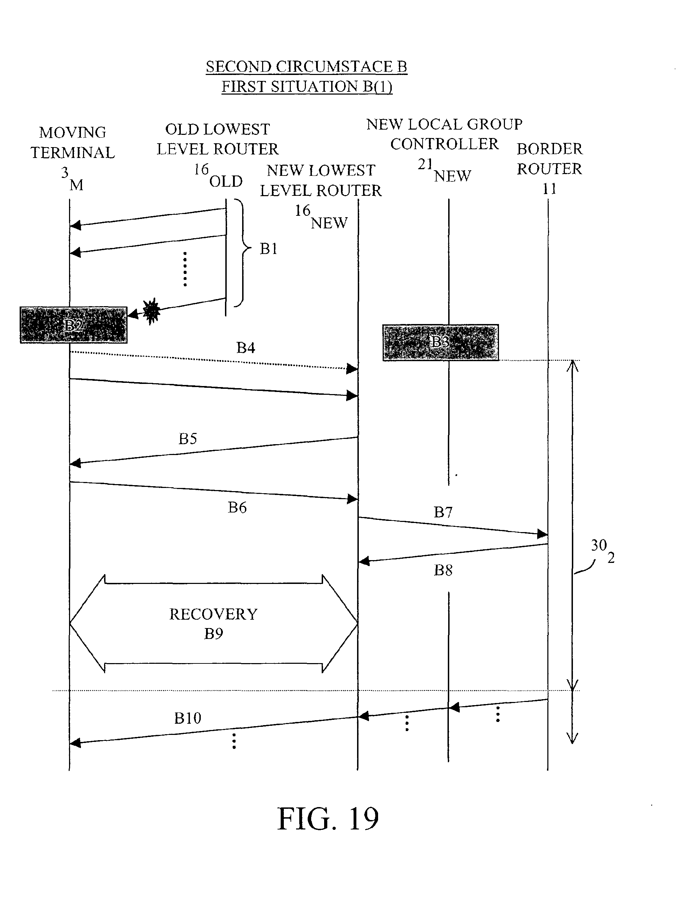

Referring to Figure 19, a sequence diagram is shown for the first situation B(1). In this case, the moving terminal 3_{M} moves from the original area 8_{OLD} where the algorithm has not been executed to the destination area 8_{NEW} where the algorithm has been carried out and where a new local group 22_{NEW} has been established.

The sender 2 multicasts a block of data 24 via the old lowest level router 16_{OLD} to the moving terminal 3_{M} located in the original area 8_{OLD} (step B1). The moving terminal 3_{M} moves to the new area 8_{NEW} while it receives multicast frames of the data block (step B2). In the destination area 8_{NEW}, the local group controller decision algorithm has been already executed (step B3). A second timeout 30₂ is set for recovery and begins when algorithm is executed. When the moving terminal 3_{M} detects that it is in a new cell 14_{NEW}, it sends the join message JOIN, which includes a corresponding multicast group address but not a local group address (step B4). The new lowest level router 16_{NEW} of the destination area receives the message. The new lowest level router 16_{NEW} requests and receives a reception state 6 from the moving terminal 3_{M} (steps B5 & B6). The new lowest router 16_{NEW} takes care of recovery for moving terminal 3_{M} because local groups 22 are already established. The new lowest router 16_{NEW} requests and receives frames needed for retransmission to the moving terminal 3_{M} from the border router 11 (step B7 & B8). The new lowest router 16_{NEW} executes recovery for the moving terminal 3_{M} (step B9). Multicast transmission of the next block of data 24 takes place via the new lowest level router 16_{NEW} (step B10).

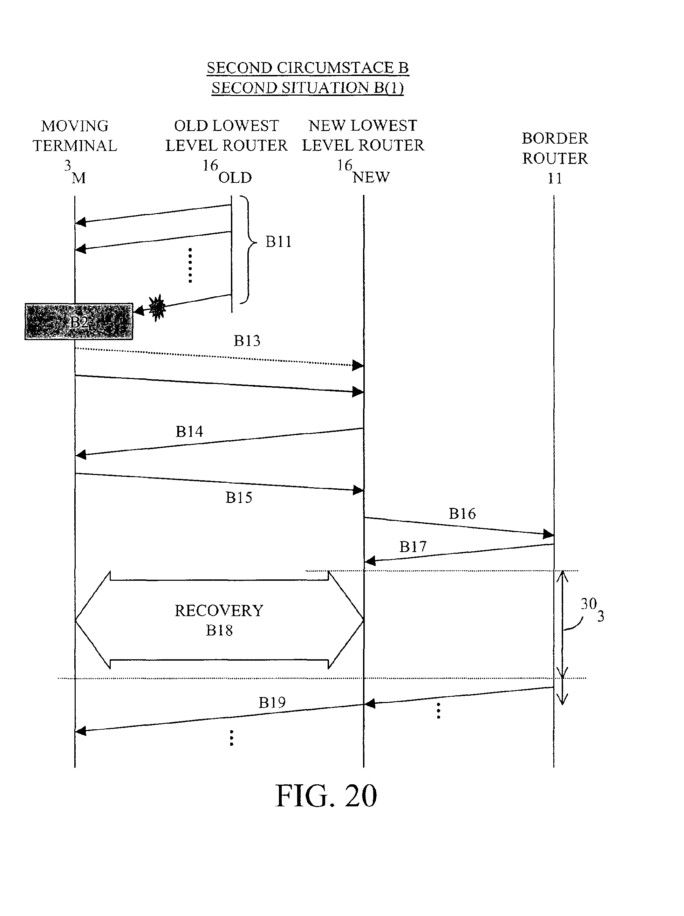

Referring to Figure 20, a sequence diagram is shown for the second situation. In this case, the moving terminal 3_{M} moves from the original area 8_{OLD} where the algorithm has not been executed to the destination area 8_{NEW} where the algorithm has been carried out, but no local group has been established.

The sender 2 multicasts a block of data 24 via the old lowest level router 16_{OLD} to the moving terminal 3_{M} located in the original area 8_{OLD} (step B11). The moving terminal 3_{M} moves to the new area 8_{NEW} while it receives multicast frames of the data block (step B12). When the moving terminal 3_{M} detects that it is in a new cell 14_{NEW}, it sends a join message JOIN, which includes a corresponding multicast group address but not a local group address (step B13). The new lowest level router 16_{NEW} of the destination area 8_{NEW} receives the message JOIN. The new lowest level router 16_{NEW} requests and receives a reception state 6 from the moving terminal 3_{M} (steps B14 & B15). The new lowest level router 16_{NW} takes care of recovery for moving terminal 3_{M} because no local groups have been established. The new lowest level router 16_{NEW} requests and receives frames needed for retransmission to the moving terminal 3_{M} from the border router 11 (steps B16 & B17). ). A third timeout 30₃ is set for recovery and begins when the new lowest level router 16_{NEW} receives the frames for retransmission. The new lowest level router 16_{NEW} executes recovery for the moving terminal 3_{M} (step B18). Multicast transmission of the next block 24 of data takes place via the new lowest level router 16_{NEW} (step B19).

### Third circumstance C

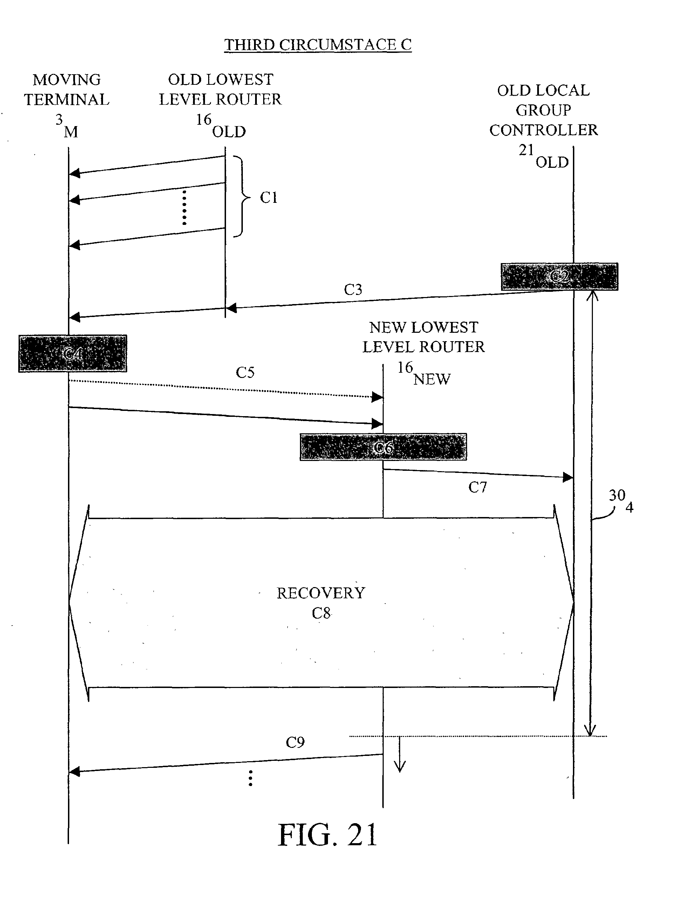

Referring to Figure 21, a multicasting sequence diagram for the third circumstance C is shown. In this case, the local group controller decision algorithm has been executed in the original part of the network 8_{OLD}, but not at the destination 8_{NEW}.

The sender 2 multicasts a block of data 24via the lowest level router 16_{NEW} to the moving terminal 3_{M} located in the original area 8_{OLD} (step C1). In the original area 8_{OLD}, the local group controller decision algorithm is executed and an old local group controller 21_{OLD} is selected (step C2). The old local group controller 21_{OLD} sends a local group definition to the moving terminal 3_{M} (step C3). A fourth timeout 30₄ is set for recovery and begins the local group definition is transmitted. The moving terminal 3_{M} moves to the new area 8_{NEW} and when it detects that it is in the new cell 14_{NEW}, it sends a join message JOIN, which includes a corresponding multicast group address and a local group address (steps C4 & C5). The new lowest level router 16_{NEW} of the destination area 8_{NEW} receives the message, checks the local group address and learns that the moving terminal 3_{M} previously belonged to the old local group controller 21_{OLD} in the original area 8_{OLD} (step C6). The new lowest level router 16_{NEW} reports to the old local group controller 21_{OLD}, informing it that the moving terminal 3_{M} is in the destination area 8_{NEW} (step C7). The old local group controller 21_{OLD} in the original area 8_{OLD} takes care of recovery for the moving terminal 3_{M} located in the destination area 8_{NEW} and retransmits the required frames via the new lowest level router 16_{NEW} (step C8). Multicast transmission of the next block of data takes place via the new lowest level router 16_{NEW} (step C9).

### Fourth circumstance D

In the fourth circumstance D, when the moving terminal 3_{M} moves from the original area 8_{OLD} where the algorithm has already been executed to the destination area 8_{NEW} where the algorithm has also been carried out, three situations D(1), D(2), D(3) can arise. In the first situation, the moving terminal 3_{M} moves from an original area 8_{OLD} that is part of an old local group 22_{OLD} to a destination area 8_{NEW} that is part of the same old local group 22_{OLD}. In the second situation, the moving terminal 3_{M} moves from an original area 8_{OLD} that is part of an old local group 22_{OLD} to a destination area 8_{NEW} that is part of a new local group 22_{NEW}. In the third situation, the moving terminal 3_{M} moves from an original area 8_{OLD} that is part of an old local group 22_{OLD} to a destination area 8_{NEW} in which no local group is defined.

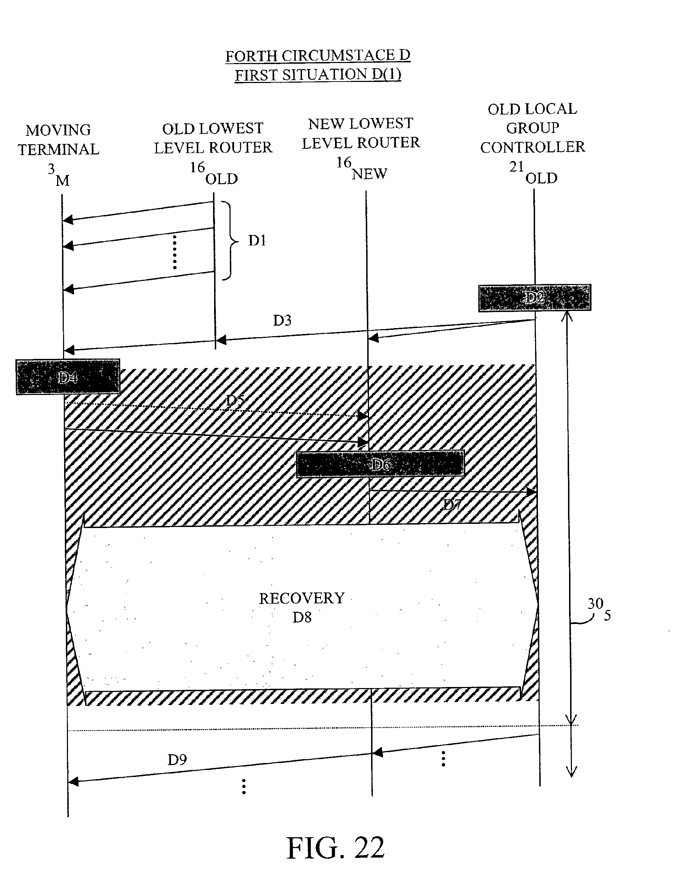

Referring to Figure 22, a multicast sequence diagram is shown for the first situation D(1), in which the moving terminal 3_{M} moves from an original area 8_{OLD} that is part of an old local group 22_{OLD} to a destination area 8_{NEW} that is part of the same, old local group 22_{OLD}.

The sender 2 multicasts a block of data via the old lowest level router 16_{OLD} to the moving terminal 3_{M} located in the original area 8_{OLD} (step D1). In the original area 8_{OLD}, the local group controller decision algorithm is executed in respect of the block of data and an old local group controller 21_{OLD} is selected (step D2). The old local group controller 21_{OLD} sends a local group definition to the moving terminal 3_{M} (step D3). A fifth timeout limit 30₅ is set and begins when the local group definition is transmitted. The moving terminal 3_{M} moves to a new area 8_{NEW}, which happens to be part of the same, old local group 22_{OLD}, and when it detects that it is in the new cell 14_{NEW}, it sends a join message, which includes a corresponding multicast group address and a local group address (steps D4 & D5). The new lowest level router 16_{NEW} of the destination area 8_{NEW} receives the message, checks the local group address and learns that the moving terminal 3_{M} is part of the same, old local group 22_{OLD} (step D6). The new lowest level router 16_{NEW} reports to the old local group controller 21_{OLD}, informing it that the moving terminal 3_{M} has moved (step D7). No other action is required because the moving terminal 3_{M} is part of the same, old local group 22_{OLD}. Local recovery and multicasting of the next block of data continues as usual (steps D8 & D9).

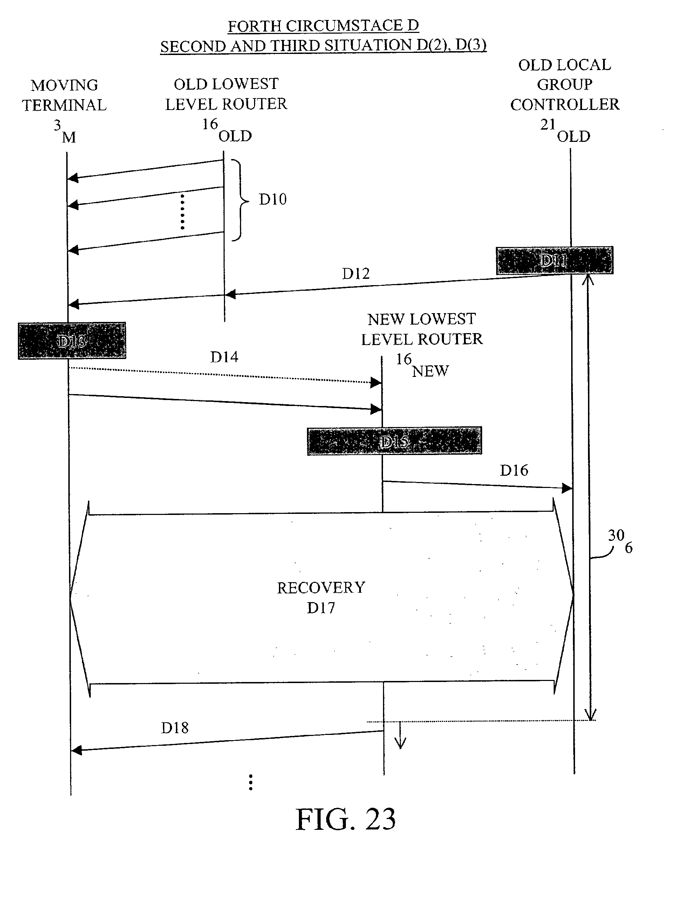

Referring to Figure 23, a multicast sequence diagram is shown for the second and third situations D(2), D(3) in which the moving terminal 3_{M} moves from the original area 8_{OLD} that is part of an old local group 22_{OLD} to a destination area 8_{NEW} that is part of a new, different local group 22_{NEW} or that does not have a local group. These two situations are treated in the same way.

The sender 2 multicasts a block of data 24 via the old lowest level router 16_{OLD} to the moving terminal 3_{M} located in the original area 8_{OLD} (step D10). In the original area 8_{OLD}, the local group controller decision algorithm is executed in respect of the block of data and an old local group controller 21_{OLD} is selected (step D11). The local group controller 21 sends a local group definition to the moving terminal 3_{M} (step D12). A sixth timeout limit 30₆ is set and begins when the local group definition is transmitted. The moving terminal 3_{M} moves to a new area 8_{NEW} and when it detects that it is in the new cell 14_{NEW}, it sends a join message JOIN, which includes a corresponding multicast group address and a local group address (steps D13 & D14). The new lowest level router 16_{NEW} receives the message JOIN, checks the local group address and learns that the moving terminal 3_{M} previously belonged to the old local group controller 21_{OLD} in the original area 8_{OLD} (step D15). The new lowest level router 16_{NEW} reports to the old local group controller 21_{OLD}, informing it that the moving terminal 3_{M} is in the destination area 8_{NEW} (step D16). The old local group controller 21_{OLD} takes care of recovery for the moving terminal 3_{M} located in the destination area 8_{NEW} and retransmits the required frames via the new lowest level router 16_{NEW} (step D17). Multicast transmission of the next block of data takes place via the new lowest level router 16_{NEW} (step D18).

### No multicast tree 13 established in destination area 8_{NEW}

In the second case, where no multicast tree has been established in the destination area 8_{NEW}, the response of the network 1 depends on whether routers 16 in the original part of the network 8_{OLD} have executed the algorithm for determining whether they should become local group controllers 21.

There are fifth and sixth circumstances E, F under which the moving terminal 3_{M} may move. In the fifth circumstance E, the local group controller decision algorithm has not been executed in the original part of the network 8_{OLD}. In the sixth circumstance F, the local group controller decision algorithm has been executed.

As in the first case, the network 1 response is governed by two rules as hereinbefore described.

### Fifth circumstance E

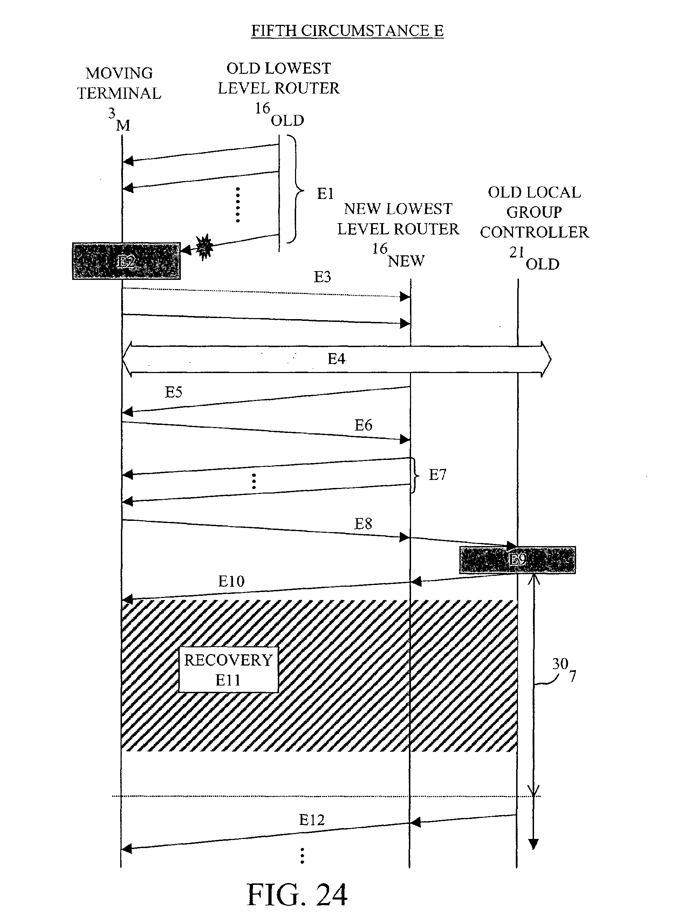

Referring to Figure 24, a multicasting sequence diagram for the fifth circumstance E is shown. In this case, the local group controller decision algorithm has not been executed in the original part of the network 8_{OLD}.

The sender 2 multicasts a block of data via an old lowest level router 16_{OLD} to the moving terminal 3_{M} located in the original area 8_{OLD} (step E1). The moving terminal 3_{M} moves to a new area 8_{NEW} while it receives multicast frames of the data block 24 (step E2). When the moving terminal 3_{M} detects that it is in a new cell 14_{NEW}, it sends a join message JOIN, which includes a corresponding multicast group address but not a local group address (step E3). A new lowest level router 16_{NEW} of the destination area receives the message and exchanges multicast routing information with higher routers 16 so as to form a new multicast tree 13 using protocols hereinbefore described (Step E4). The new lowest level router 16_{NEW} requests and receives the reception state 6 from the moving terminal 3_{M} (steps E5 & E6). The moving terminal 3_{M} receives the remaining frames of the data block (step E7) and returns a reception state 6 (step E8). The reception state 6 is transmitted to the new lowest level router 16_{NEW}, which executes an algorithm to determine whether it should become a new local group controller 21_{NEW}. The reception state 6 is transmitted to a higher level router 16 in the destination area 8_{NEW} until a router 16 determines that the router 16 below it should becomes the new local group controller 21_{NEW} (step E9). Once the new local group controller 21_{NEW} has been selected, a new local group 22_{NEW} is defined and local recovery is carried out in the new area 8_{NEW} (step E10 & E11). A seventh timeout limit 30₇ is set and begins when the local group definition is transmitted. Multicast transmission of the next block of data takes place via the new lowest level router 16_{NEW} (step E12).

### Sixth circumstance F

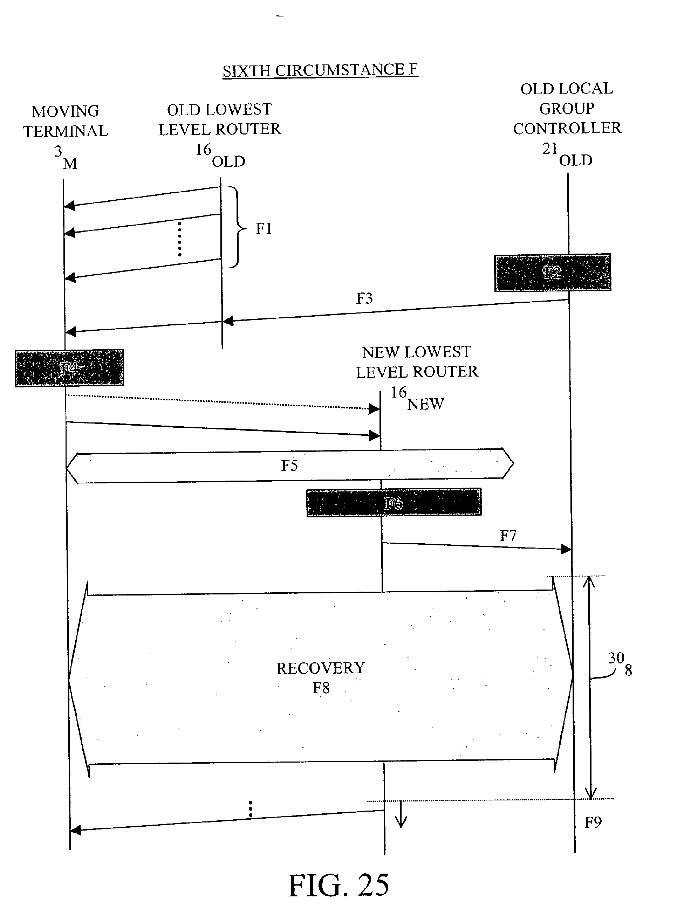

Referring to Figure 25, a multicasting sequence diagram for the sixth circumstance F is shown. In this case, the local group controller decision algorithm has been executed in the original part of the network 8_{NEW}.

The sender 2 multicasts a block of data via an old lowest level router 16_{OLD} to the moving terminal 3_{M} located in the original area 8_{OLD} (step F1). In the original area 8_{OLD}, the local group controller decision algorithm is executed and an old local group controller 21_{OLD} is selected (step F2). The old local group controller 21_{OLD} sends a local group definition in respect of the block of data to the moving terminal 3_{M} (step F3). The moving terminal 3_{M} moves to a new area 8_{NEW} and when it detects that it is in the new cell 14_{NEW}, it sends a join message JOIN, which includes a corresponding multicast group address and a local group address (step F4). The new lowest level router 16_{NEW} of the destination area receives the message JOIN and exchanges multicast routing information with higher routers 16 so as to form a new multicast tree 13_{NEW} (Step F5). Once the new multicast tree 13_{NEW} is established, the new lowest level router 16_{NEW} checks the local group address and learns that the moving terminal 3_{M} previously belonged to the old local group controller 21_{OLD} in the original area 8_{OLD} (step F6). The new lowest level router 16_{OLD} reports to the old local group controller 21_{OLD}, informing it that the moving terminal 3_{M} is in the destination area 8_{NEW} (step F7). A eighth timeout limit 30₈ is set and begins when the local group controller receives the report of movement of the terminal. The old local group controller 21_{OLD} in the original area 8_{OLD} takes care of recovery for the moving terminal 3_{M} located in the destination area 8_{NEW} and retransmits the required frames via the new lowest level router 16_{NEW} (step F8). Multicast transmission of the next block of data takes place via the new lowest level router 16_{NEW} (step F9).

### Layer model

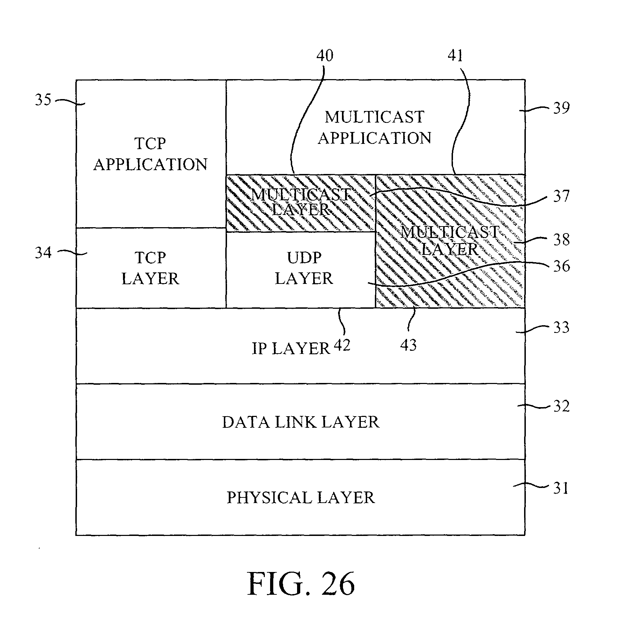

Referring to Figure 26, a layer model for the multicast system is shown according to the International Standards Organisation (ISO) Reference Model for Open Systems Interconnections (OSI). The network dependent layers of the layer model, i.e. the three lowest layers, comprise a physical layer 31, a data link layer 32 and an IP layer 33. The physical layer 31 takes charge of communication at the physical level. The data link layer 32 manages the communication of data between nodes. The IP layer 33 manages end-to-end communication of IP packets from sender to receiver.

The transport layer is split. On the one hand, transmission control protocol (TCP) layer 34 serves a TCP application 35. On the other, either a combination of a user datagram protocol (UDP) layer 36 and an overlying first multicast layer 37 or a second multicast layer 38 alone may serve a multicast application 39. Between them, the TCP and UDP layers 34, 36 provide for connection- and connectionless-types of communication using IP packets. TCP is more reliable than UDP because it performs such functions as error recovery and flow control. However, TCP/UDP is dedicated to one-to-one communication. In this example, the multicast layers 37, 38 are responsible for carrying out the method of multicasting according to the present invention.

In this example, session and presentation layers are included in the application layer. Respective first and second interfaces 40, 41 between the multicast application 39 and the first and second multicast layers 37, 38 are the same. On the other hand, respective third and fourth interfaces 42, 43 between the IP layer 33 are different. The UDP layer 36 provides efficient communication between a connectionless-type application and the IP layer 33 by, for example, managing the session of the application. In the case of the second multicast layer 38, there is no UDP layer. Therefore, the second multicast layer 38 undertakes UDP functions and this is reflected in the fourth interface 43.

### Frame structure

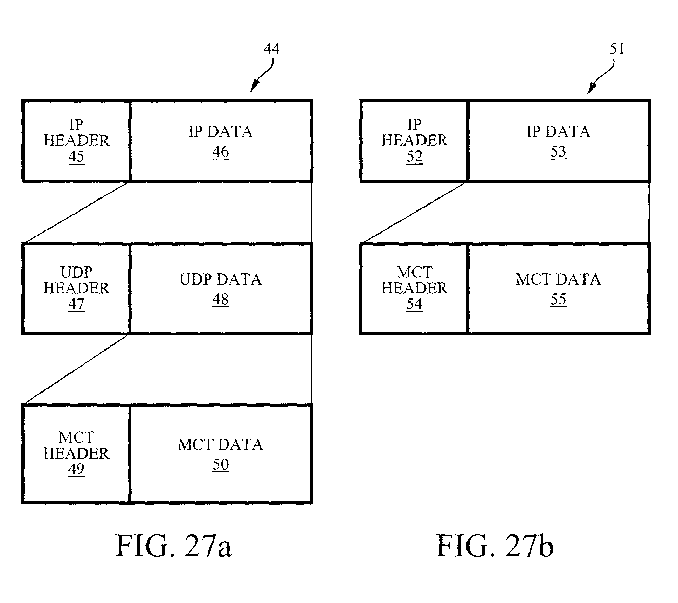

Referring to Figure 27a, a first example of a frame structure 44 at the third interface 42 is shown. The first frame structure 44 comprises an IP header 45 and IP data payload 46. The IP data 46 comprises a UDP header 47 and UDP data 48. The UDP data 48 comprises multicast transport (MCT) header 49 and MCT data 50.

Referring to Figure 27b, a second example of a frame structure 51 at the fourth interface 43 is shown. The second frame structure 51 comprises an IP header 52 and IP data payload 53. The IP data 53 comprises a MCT header 54 and MCT data 55. In case of the second frame structure 51, a new protocol number in the IP header 52 is defined.

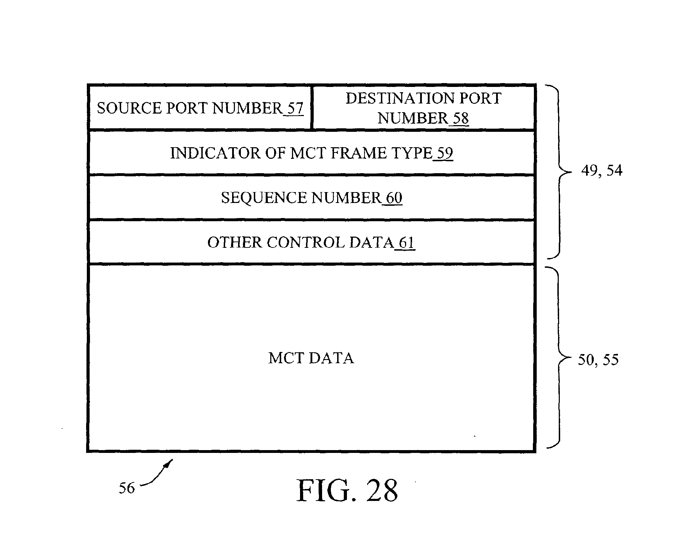

Referring to Figure 28, the general structure of an MCT frame 56 comprising the MCT header 49, 54 and the MCT data 50, 55 is shown. The MCT header 49, 54 comprises a source port number 57, destination port number 58, indicator of MCT frame type 59, a sequence number 60 and other control data 61. The source and destination port numbers 57, 58 identify the application process at the source host and destination host, respectively. The sequence number 60 is used at the receiver to reorder application data sent in the MCT frame 56 by the sender. When control data is sent, the control data frame does not use the sequence number 60.

In this example, the indicator 59 comprises a three-bit number, defining seven types of MCT frame 56. Table 2 below lists the different indicators against message type:

**TABLE 2**

| **Indicator** | **Message Type** |
|---|---|
| 001 | Application data |
| 010 | Reception State |
| 011 | Definition information report |
| 100 | Request for reception state |
| 101 | Request for information of local recovery |
| 110 | Information of local recovery |
| 111 | Report of moving terminal movement |

It will be appreciated that different combinations of indicator number and message may be used. When sending multicast data, the indicator 59 is set to "001", thus indicating Application data. The MCT frame 56 is handled by the multicast layer 37, 38.

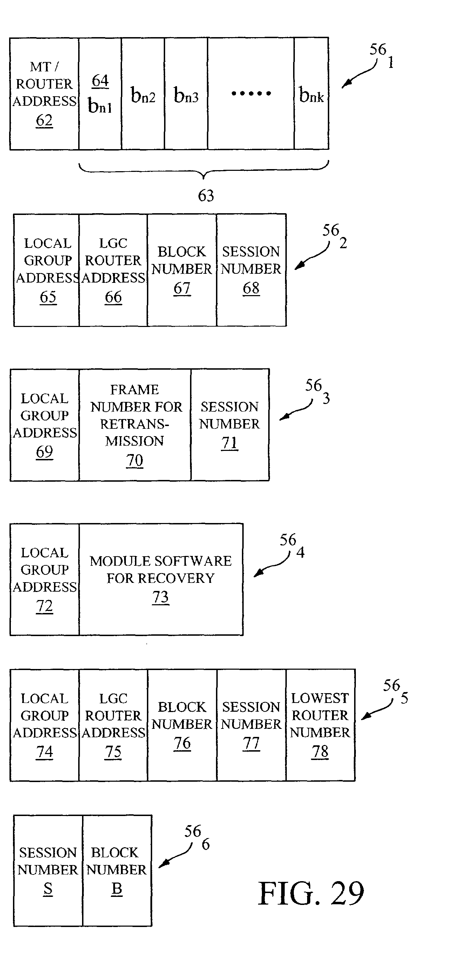

Referring to Figure 29, first, second, third, fourth, fifth and sixth examples 56₁, 56₂, 56₃, 56₄, 56₅, 56₆ of the structures of the MCT frame 56 are shown.

The first MCT frame 56₁ is a reception state 6 generated by the mobile terminal 3 or the router 16. It comprises a mobile terminal/router address 62 and a bit area 63. The address 62 is the IP address for the mobile terminal or router that sent the reception state. Each bit 64 in the bit area 63 represents a frame in a block. A bit 64 set to "1" indicates a correctly received frame, while a bit 64 set to "0" represents an incorrectly received.

The second MCT frame 56₂ is a definition information report M (Figure 15) generated by the local group controller 21. It comprises a local group address 65, a local group controller address 66, a block number 67 and a session number 68.

The third MCT frame 56₃ is a request for information of local recovery generated by the local group controller 21 and the lowest level router 16. It comprises a local group address 69, a frame sequence number for retransmission 70 and session number 71, which identifies multicast application.

The fourth MCT frame 56₄ is information of local recovery 23 generated by the border router 11. It comprises a local group address 72 and a requested module software for recovery 73.

The fifth MCT frame 56₅ is a report of mobile terminal movement generated by the lowest level router 16. It comprises a local group address 74, a local group controller address 75, a block number 76, a session number 77 and a lowest level router address 78.

The sixth MCT frame 56₆ is a request for reception state. It comprises a session number S and a block number B. There is no MCT data.

The MCT data frame 50, 55 is used for the initial transmission and retransmission of data.

### Structure of network elements

### Router 16

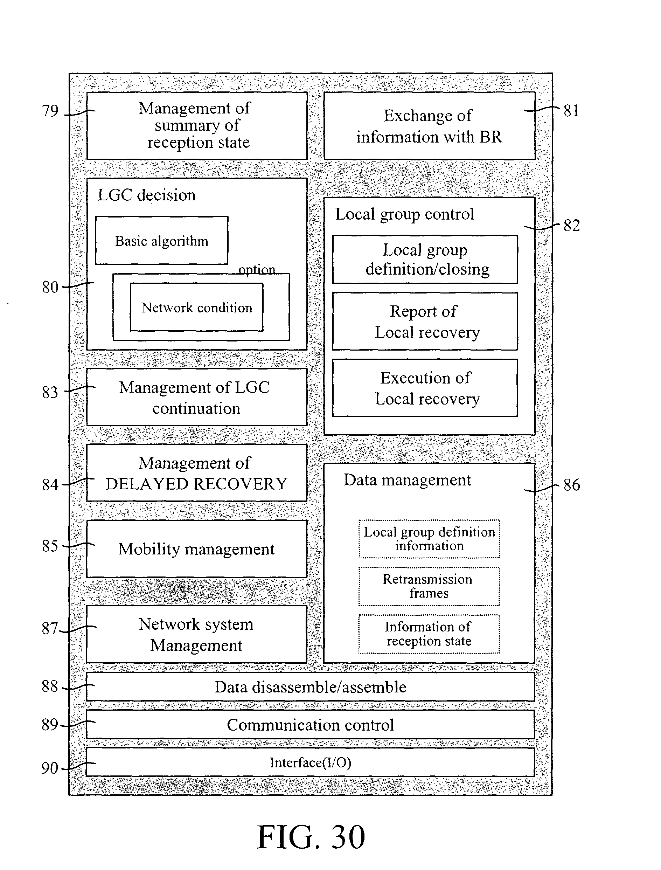

Referring to Figure 30, a schematic diagram of the processes implemented by each router 16 is shown. A plurality of processes are executed by a microprocessor (not shown) as will now be described.

A management of summary of reception state process 79 analyses reports of reception state 6 from received from a lower level router 16 or mobile terminal 3 and, if one is needed, generates a new summary 20 report of reception state to send to a higher level router 16. A local group controller decision process 80 judges whether the router 16 should become the local group controller 21 according to the local group controller decision algorithm. The exchange of information with the border router process 81 is used for requesting information from the border router 11 to organise a new local group. A local group control process 82 manages local group definition, handles reports of local recovery and execution of local recovery. A management of local group controller continuation process 83 judges whether the router 16, once selected as a local group controller 21, should continue to be selected and whether it should keep or remove local group controller information 23. A management of delayed recovery process 84 is used for the management of delayed recovery. A mobility management process 85 manages continuation of the multicast session for the moving terminal after organisation of the local group 22. A data management process 86 manages the renewal, removal and addition of local group definition information and retransmission frames sent from the border router 11. It also manages the renewal, removal and addition of summaries of reception states from lower level routers 16. A network system management process 87 manages network control information. A data disassemble/assemble process 88 divides blocks into frames and assembles multicast data. A communication control process 89 and Interface (I/O) 90 are based on standard protocols.

### Border router 11

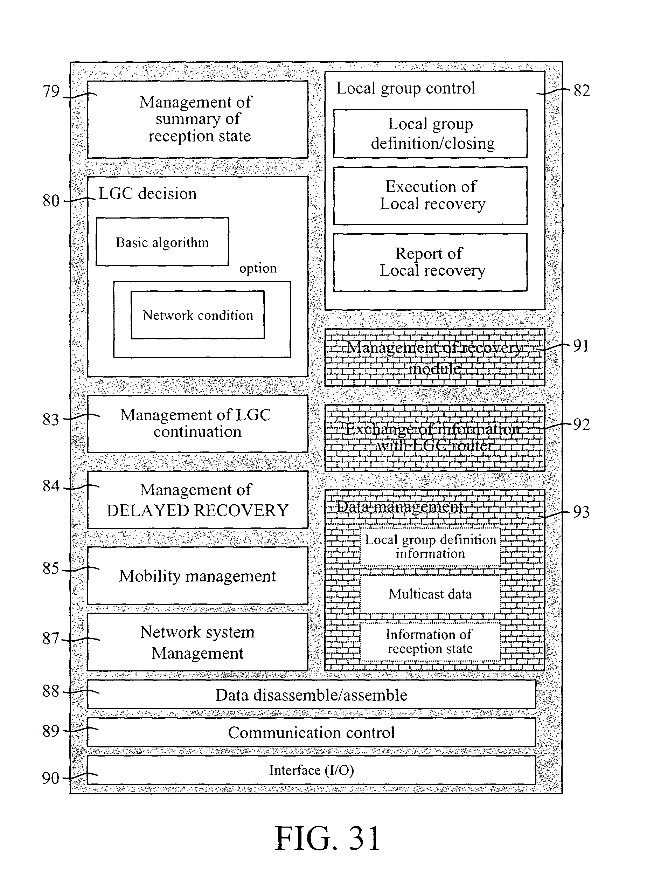

Referring to Figure 31, a schematic diagram of the processes implemented by each border router 11 is shown. The border router 11 implements the processes described above in relation to a router 16 minus the exchange of information with the border router process 81 plus some additional described below.

A management of recovery module process 91 stores recovery modules suitable for multicast applications. In response to a request from a local group controller 21, the border router 11 returns a corresponding recovery module. An exchange of information with a proxy router process 92 manages the local group address and error frame sequence number within the sub-network 8 connected to the border router 11. In response to a request from the local group controller 21, the border router 11 returns information relating to a new local group 22 and retransmission frames. A data management process 93 assigns a local group address to a local group controller 21. It copies and stores multicast data, while relaying it to lower level routers 16 on the multicast tree 13.

### Mobile terminal 3

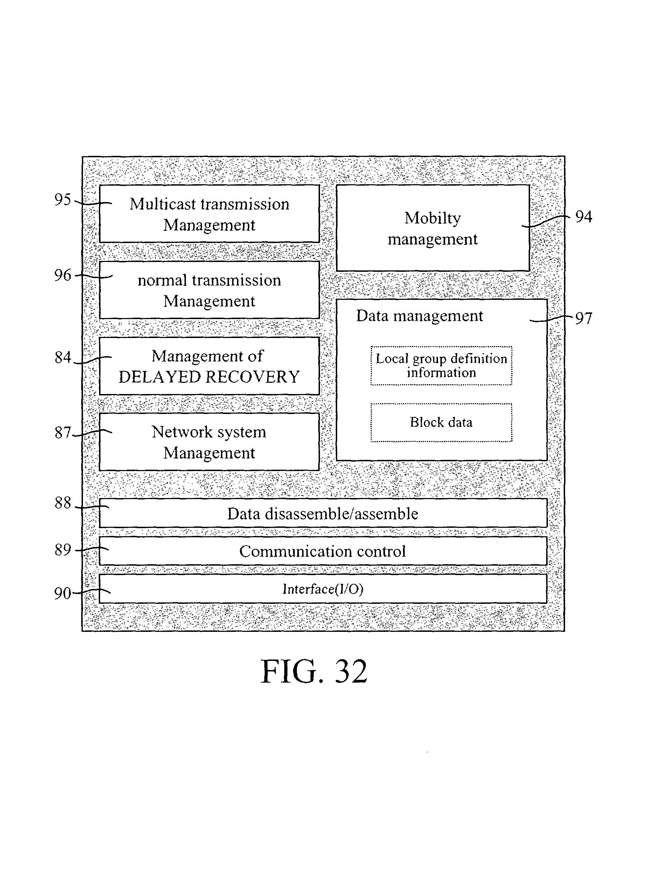

Referring to Figure 32, a schematic diagram of the processes implemented by each mobile terminal 3 is shown. A plurality of processes are executed by a microprocessor (not shown) as described below.

A mobility management process 94 controls message sequences with the network 1 after the mobile terminal 3 sends a join message. A multicast transmission management process 95 controls operation of the multicast layer 37, 38 when it receives multicast application data from the application layer 39. A normal transmission management process 96 controls the transport layer other than the multicast layer 37, 38, i.e. TCP and UDP layers 34, 36. A data management process 97 keeps local group definition information after having participated in local group for recovery and also a block of data.

The mobile terminal 3 also implements the management of delayed recovery process 84, the network system management process 87, the data disassemble/assemble process 88, communication control 89 and interface process 90 as described hereinbefore.

### Process flows

### At the router 16, process for choosing to become the local group controller 11 - Example 1

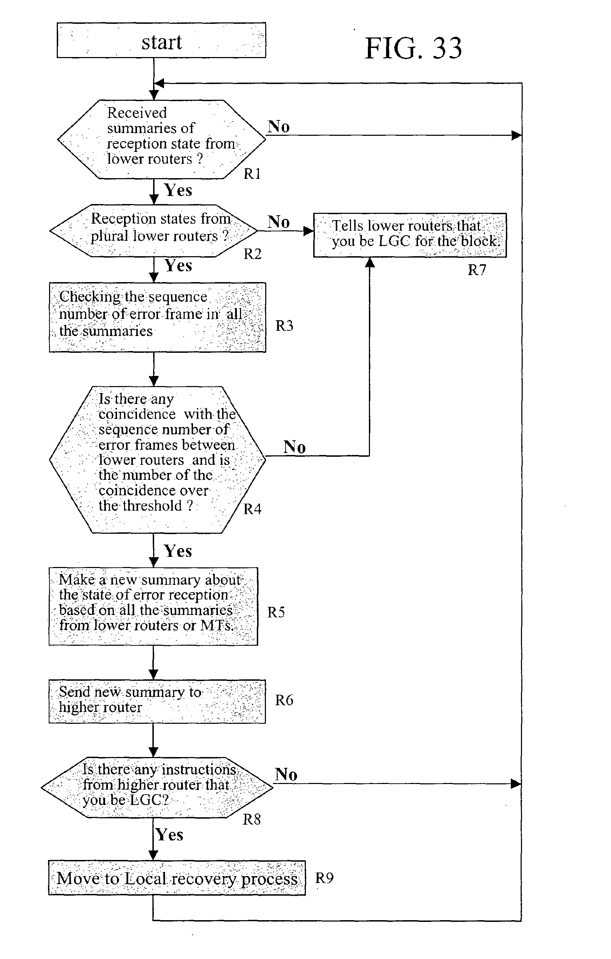

Referring to Figure 33, a process flow diagram for deciding the local group controller 21 according to the first example referred to in Figure 8 is shown.

A router 16 waits until it receives at least one summary of reception states 20 from lower level routers 16 or mobile terminals 3 (step R1). When it receives at least one summary of reception states 20, the router 16 checks whether it has received summaries 20 from more than one router 16 (step R2). If it has received summaries 20 from more than one router 16, the router 16 checks the summaries for coincident error frames (step R3). If there are coincidences and if the number of coincidences exceeds a threshold (step R4), then the router 16 makes a new summary of the reception states (step R5) and sends it to higher level router 16 (step R6). If there are no coincidences or the number of coincidences does not exceed the threshold, then the router 16 instructs the lower level routers 16 to become the local group controller 21 (step R7). Similarly, in step R2, if the router 16 does not receive a plurality of summaries from routers 16, the router 16 instructs the lower level router 16 to become the local group controller 21.

If the router 16 sends a summary 20 to a higher level router in step R6, it waits for instructions from the higher level router. If the router receives instructions from the higher level router 16 to become the local group controller 21 (step R8), it becomes the local group controller 21 and executes local recovery (step R9). In the absence of such an instruction, the decision process returns to the beginning ready for the next block.

### At the router 16, process for choosing to become the local group controller 11 - Example 2

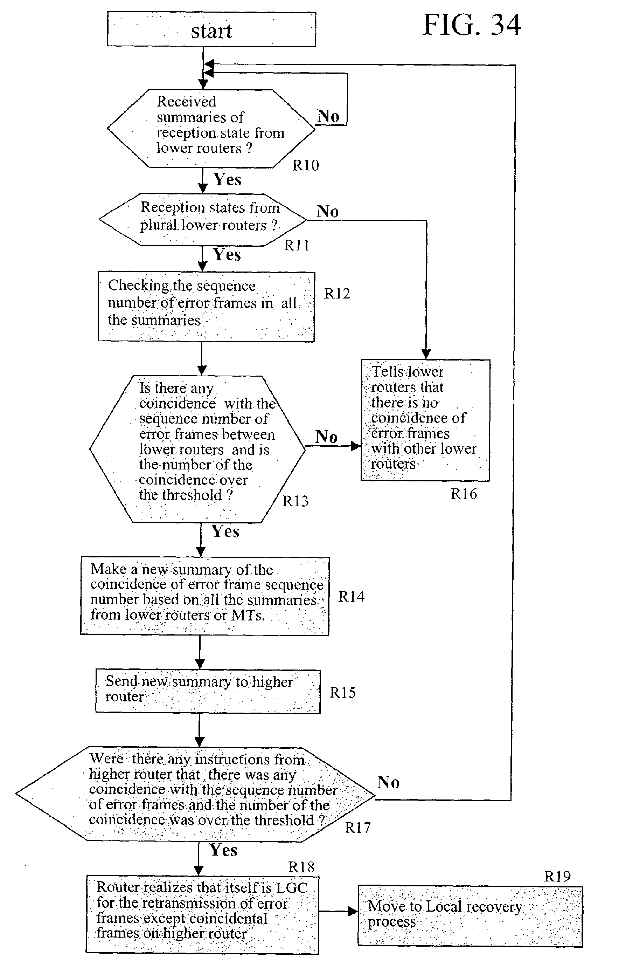

Referring to Figure 34, a process flow diagram for deciding the local group controller 21 according to the second example referred to in Figures 9 and 10 is shown.

A router 16 waits until it receives at least one summary of reception states 20 from lower level routers 16 or mobile terminals 3 (step R10). When it receives at least one summary of reception states 20, the router 16 checks whether it has received summaries 20 from more than one router 16 (step R11). If it has received summaries 20 from more than one router 16, the router 16 checks the summaries for coincident error frames (step R12). If there are coincidences and if the number of coincidences exceeds a threshold (step R13), then the router 16 makes a new summary of the reception states listing the coincidental frame numbers (step R14) and sends it to higher level router 16 (step R15). If there are no coincidences or the number of coincidences does not exceed the threshold, then the router 16 instructs the lower level routers 16 to become the local group controller 21 (step R16). Similarly, in step R11, if the router 16 does not receive a plurality of summaries from routers 16, the router 16 instructs the lower level router 16 to become the local group controller 21.

If the router 16 sends a summary 20 to a higher level router in step R15, it waits for instructions from the higher level router. If the router receives instructions from the higher level router 16 to become the local group controller 21 (step R17), it becomes the local group controller 21 for the recovery of retransmission of error frames except the coincidental frames (step R18) and executes local recovery (step R19). In the absence of such an instruction, the decision process returns to the beginning ready for the next block.

### At the router 16 with cache, processes for detecting errors and choosing to become the local group controller 11

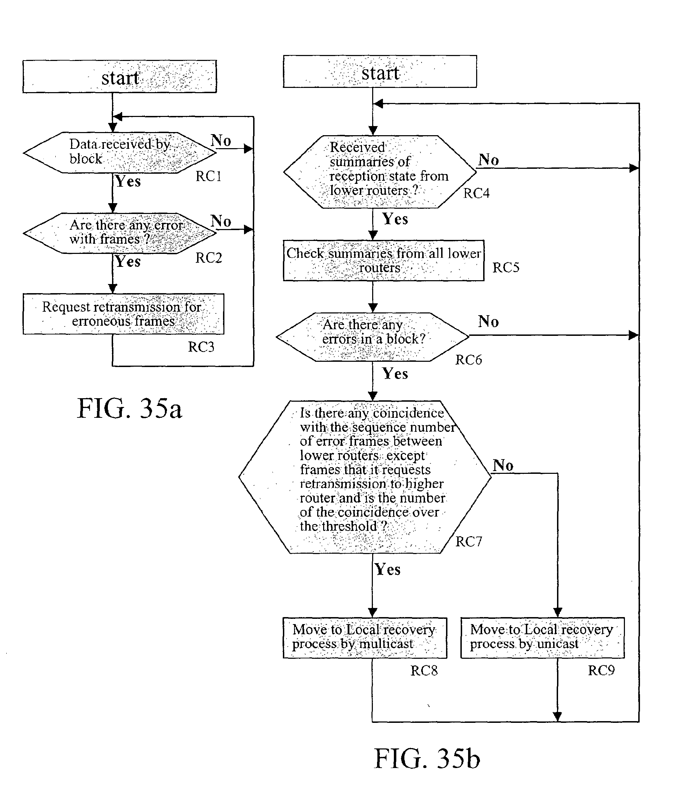

Referring to Figures 35a and 35b, process flow diagrams for detecting error and deciding the local group controller 21 according to the example referred to in Figure 11 are shown.

In Figure 35a, the router 16 receives data and checks whether it constitutes a block (step RC1). The router 16 waits until it receives a block of data before proceeding further. Once the router receives a block of data, it checks whether there are any error frames (step RC2). If there are any erroneous frames, the router 16 sends a request to the border router 11 for retransmission of the erroneous frames (step RC3), otherwise it waits until it receives the next block.

In Figure 35b, the router 16 waits until it receives summaries 20 of reception states from lower level routers 16 (step RC 4). Once it has received the summaries 20, the router 16 checks them (step RC5) and detects whether there are any errors in the block of data (step RC6). The router 16 checks the number of coincidental error frames (step RC7). Local groups 22 are arranged according to the number of coincidental error frames. If the number of coincidental error frames exceeds a threshold, then the router 16 defines a local group for multicast retransmission of all except the coincidental error frames (step RC8). If the number of coincidental error frames falls below the threshold, then the router 16 defines a local group for unicast retransmission of the non-coincidental erroneous frames (step RC8).

### At the router 16, process for achieving system stability

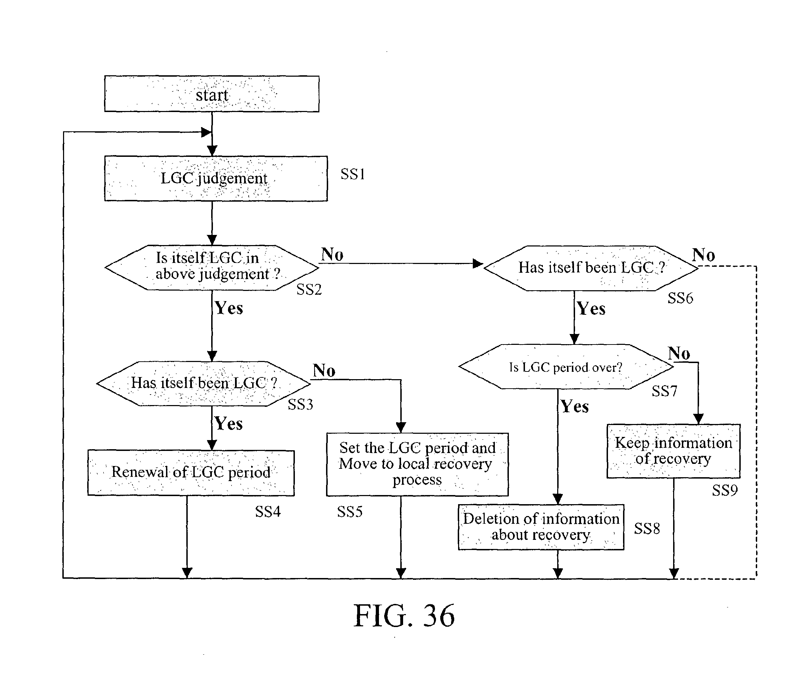

Referring to Figure 36, a process flow diagram for achieving system stability according to the example referred to in Figure 13 is shown.

A router 16 decides whether it should become the local group controller 21 according to one of the examples described hereinbefore (step SS1, SS2). If the router 16 decides that it should become the local group controller 21, it checks whether it has been the local group controller 21 for any of the previous four blocks of data (step SS3). If it has, then the local group controller 21 then local group controller continuation period 27 (Figure 13) is extended (step SS4). If not, a local group controller continuation period is set and the local group controller 21 executes local recovery (step SS5).

If at step SS2, the router 16 decides that it should not become the local group controller 21, it checks whether it has been the local group controller 21 for any of the previous four blocks (step SS6). If it has, then the router 16 checks to see if the local group controller continuation period 27 (Figure 13) has expired (step SS7). If the period 27 has expired, then the router 16 deletes information regarding local group address and the recovery module (step SS8). If the period 27 has not expired, then the router 16 keeps the recovery information and stores frames while relaying them to lower routers (step SS9).

The process then returns to the beginning to determine the local group controller 21 for the next block.

### At the mobile terminal 3, process for participating in defining the local group

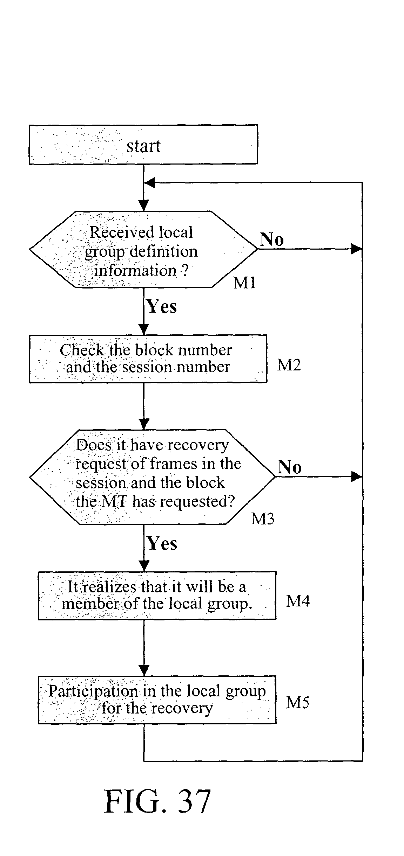

Referring to Figure 37, a process flow diagram for participating in defining the local group according to the examples shown in Figures 14 and 15 is shown.

The mobile terminal 3 waits until it receives local group definition information comprising local address, block number and session number (step M1). This is carried out by the multicast transmission management process 95 (Figure 32). The mobile terminal 3 checks the block number B and session number S (step M2) and determines whether the received definition information is for the recovery of the frames requested by the mobile terminal 3 (step M3). If they are, the router 16 becomes a member of the local group (step M4) and participates in local recovery for the local group defined by the local group address (step M5). Otherwise, the router 16 does not become a member of the local group and waits until it receives further local group definition information.

### At the mobile terminal 3, process for maintaining session continuity

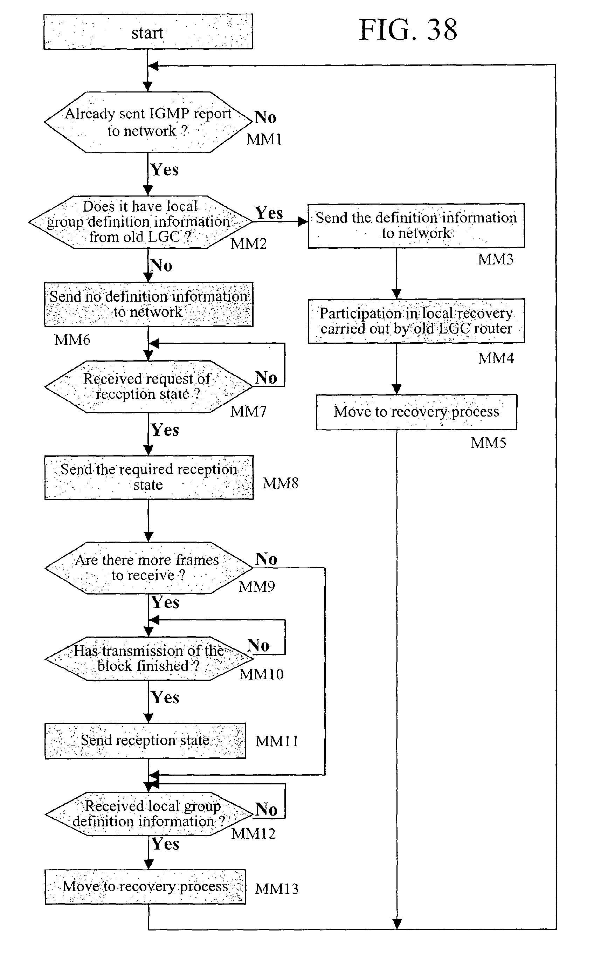

Referring to Figure 38, a process flow diagram for maintaining session continuity at the moving terminal 3_{M}, as it moves from an original area 8_{OLD} to a destination area 8_{NEW}, according to the examples shown in Figures 16 to 25 is shown.

If the moving terminal 3_{M} moves to a new cell 14_{NEW}, once it completes the handover process, it sends a join message (step MM1). The moving terminal 3_{M} checks whether it holds the local group definition from the old local group controller 21_{OLD} in the original area 8_{OLD} (step MM2). The circumstances under which the mobile terminal 3_{M} would hold the local group definition are if the local group controller decision algorithm has been executed in the original area 8_{OLD} and the old local group 22_{OLD} has been organised, as shown in Figures 21 and 22.

If the moving terminal 3_{M} does hold the local group definition, then it sends the local group definition information to the destination area 8_{NEW} (step MM3). The old local group controller 21_{OLD} in the original area 8_{OLD} takes care of recovery for the moving terminal 3_{M} after the move (steps MM4, MM5).

If the moving terminal 3_{M} does not hold a local group definition, then no local group definition information is sent to the destination area 8_{NEW} (step MM6). The moving terminal 3_{M} exchanges requests and replies with the new lowest level router 16_{NEW} in the destination area 8_{NEW}. The moving terminal 3_{M} waits until it receives a request for its reception state (step MM7). Once, it receives the request, the moving terminal 3_{M} returns the reception state (step MM8). The moving terminal 3_{M} checks whether there are any further frames to be received (step MM9). The moving terminal 3_{M} continues to receive frames until the block is completed (step MM10), at which point it sends a reception state (step MM11). Once a reception state has been sent at step MM11 or if there are no more frames to be received at step MM 9, the moving terminal 3_{M} waits until it receives the local group definition information (step MM12) and on receiving the information local recovery takes place (step MM13).

### At the new lowest level router 16_{NEW}, process for maintaining session continuity

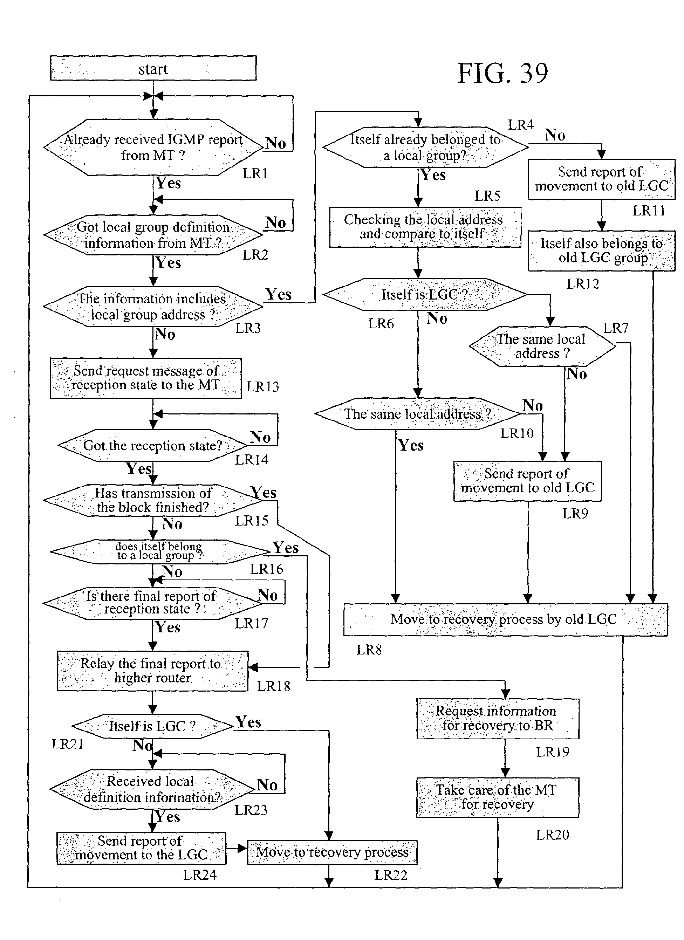

Referring to Figure 39, a process flow diagram for maintaining session continuity at the new lowest level router 16_{NEW} in the destination area 8_{NEW} according to the examples shown in Figures 16 to 25 is shown.

The new lowest level router 16_{NEW} in the destination area 8_{NEW} waits until it receives a join message from the moving terminal 3_{M} (step LR1) and then waits to receive local group definition information (step LR2). The new lowest router 16_{NEW} checks whether the local group definition information includes a local group address (step LR3). The circumstances under which the mobile terminal 3_{M} would send the local group address are if the local group controller decision algorithm has been executed in the original area 8_{OLD} and a local group 22 has been organised, as shown in Figures 20 and 21.

If, at step LR3, the information includes a local group address, the new lowest level router 16_{NEW} checks whether the router 16_{NEW} itself belongs to a local group 22 (step LR4). If it did belong to a local group 22, the new lowest level router 16_{NEW} would compare the local group address with that received from the moving terminal 3_{M} to check whether the moving terminal 3_{M} moved within the same local group (step LR5). The new lowest level router 16_{NEW} determines whether it is a local group controller 21 (step LR6). If it is a local group controller 21, the new lowest level router 16_{NEW} checks whether it has the same local address as that received from the moving terminal 3_{M} (step LR7). If the two local addresses match, then the recovery process is managed by the old local group controller 21_{OLD} in the original area 8_{OLD} (step LR8). If not, the new lowest level router 16_{NEW} sends a report to the old local group controller 21_{OLD} in the original area 8_{OLD} that the moving terminal 3_{M} has moved (step LR9) and the recovery process is managed by the old local group controller 21_{OLD} (step LR8). If, at step LR6, the new lowest level router 16_{NEW} determines that it is not a local group controller 21, it checks whether it has the same local address as the moving terminal 3_{M} (step LR10). If the two local addresses match, then the recovery process is managed by the old local group controller 21_{OLD} (step LR8). If not, the new lowest level router 16_{NEW} sends a report to the old local group controller 21_{OLD} in the original area 8_{OLD} that the moving terminal 3_{M} has moved (step LR9) and the recovery process is managed by the old local group controller 21_{OLD} (step LR8).

If, at step LR4, the new lowest level router 16_{NEW} does not belong to a local group 22, it sends a report to the old local group controller 21_{OLD} in the original area 8_{OLD} that the moving terminal 3_{M} has moved (step LR11), the router 16_{NEW} itself being part of the original local group 22_{OLD} (step LR12) and the recovery process is managed by the old local group controller 21_{OLD} (step LR8).

If, at step LR 3, the information does not include a local group address, the new lowest level router 16_{NEW} sends a request for reception state to the moving terminal 3_{M} (step LR13) and waits for a reply (step LR14). Once it receives a reception state, the new lowest level router 16_{NEW} checks whether transmission of the data block has finished (step LR15). If it has not, the new lowest level router 16_{NEW} checks whether the router 16_{NEW} itself belongs to a local group 22 (step LR16). If it does not, it checks whether there is a final report of reception state (step LR17). If there is, the new lowest level router 16_{NEW} relays the final report to a higher router 16 (step LR18). If, at step LR15, transmission of the block has finished, then the reception state received at step LR 15 is the final report and this is relayed to the higher level router 16 (step LR18).

If, at step LR16, the new lowest level router 16_{NEW} belongs to a local group 22, it sends a request for information for recovery to the border router 11 (step LR19) and executes recovery for the moving terminal 3_{M} (step LR20).

After step LR18, the new lowest level router 16_{NEW} checks whether the router 16_{NEW} itself is a local group controller 21 (step LR21). If it is, the new lowest level router 16_{NEW} executes recovery (step LR22). If it is not, it waits to receive local definition information from the old local group controller 21_{OLD} (step LR23). Once it receives the local group definition, the new lowest level router 16_{NEW} sends a report of the movement of the moving terminal 3_{M} to the old local group controller 21_{OLD} (step LR24), which executes local recovery (step LR22).

### At the old local group controller 21_{OLD}, process for maintaining session continuity

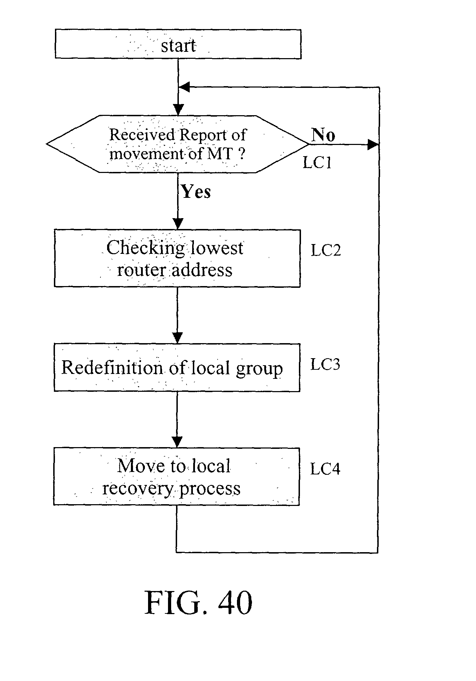

Referring to Figure 40, a process flow diagram for maintaining session continuity at the old local group controller 21_{OLD} in the original area 8_{OLD} according to the examples shown in Figures 16 to 25 is shown.

The old local group controller 21_{OLD} for the original area 8_{OLD} waits until it receives a report of movement of the moving terminal 3_{M} from the new lowest level router 16_{NEW} (step LC1). The report includes local group information comprises local group address, session number and block number, which the old local group controller 21_{OLD} arranged. The old local group controller 21_{OLD} checks the address of the new lowest level router 16_{NEW} (step LC2) and redefines the local group tree to include the new lowest router 16_{NEW} (step LC3). The old local group controller 21_{OLD} executes local recovery for the moving terminal 3_{M} (step LC4).

It will be appreciated that many modifications may be made to the embodiment described.

## Claims

1. A method of multicasting data from a sender to first, second and third receivers through a network including first and second routers, the method comprising:
transmitting a data packet from said sender to said first, second and third receivers;
detecting at said first, second and third receivers whether said data packet is properly received;
transmitting a first reception information signal from said first receiver to said first router by a first path;
transmitting a second reception information signal from said second receiver to said first router by a second path;
determining, at said first router, in dependence upon said first and second reception information signals, whether said first and second receivers require re-transmission of said data packet and, if so, transmitting information relating to said first and second reception information signals to said second router;
determining, at said second router, whether said third receiver requires re-transmission of said data packet and, if not, instructing said first router to re-transmit said data packet to said first and second receivers.

2. A method of multicasting data from a sender to first, second, third and fourth receivers through a network including first and second routers, the method comprising:
transmitting first and second data packet from said sender to said first, second, third and fourth receivers;
detecting at said first, second, third and fourth receivers whether said first and second data packets are properly received;
transmitting a first reception information signal from said first receiver to said first router by a first path;
transmitting a second reception information signal from said second receiver to said first router by a second path;
transmitting a third reception information signal from said third receiver to said first router by a third path;
determining, at said first router, in dependence upon said first, second and third reception information signals, whether said first, second and third receivers require re-transmission of said first and second data packets and, if so, transmitting information relating to said first, second and third reception information signals to said second router;
determining, at said second router, whether said fourth receiver requires re-transmission of said first and second data packets and, if not, instructing said first router to re-transmit appropriate data packets to said first, second and third receivers.

3. A method according to claim 1 or 2, further comprising transmitting a request for information relating to said data packet from said first router to an archive router.

4. A method according to any preceding claim, further comprising receiving at said first router information relating to said data packet.

5. A method of operating a router, the method comprising:
receiving a first message comprising information relating to receipt of a data packet by a first receiver,
receiving a second message comprising information relating to receipt of a data packet by a second receiver,
determining in dependence upon said first and second messages whether said first and second receivers require re-transmission of said data packet and, if so, transmitting a third message relating to receipt of said data packet by said first and second receivers to another router and
receiving an instruction from said other router to retransmit said data packet to said first and second routers.

6. A method of operating a network element, the method comprising:
receiving a first message from a first network element comprising information relating to receipt of a data packet by a first receiver,
determining whether a second message from a second network element comprising information relating to receipt of said data packet by a second receiver has been received and
if not, instructing said first network element to re-transmit said data packet, or
if so, transmitting a third message relating to receipt of said data packet by said first and second receivers to third network element and receiving an instruction from said third network element to re-transmit said data packet to said first and second network elements.

7. A method of operating a network element, the method comprising:
receiving a first message from a first network element comprising a first set of information relating to a plurality of data packets,
determining whether a second message from a second network element comprising a second set of information relating to said plurality of data packets has been received and
if not, instructing said first network element to re-transmit one or more of said plurality of data packets in dependence upon said first set of information,
if so, in dependence upon said first and second sets of information, determining the number data packets common to both first and second sets that are required for re-transmission and determining whether this number exceeds a predetermined number and
if the number does not exceed the predetermined number, instructing said first network element to re-transmit one or more of said plurality of data packets in dependence upon said first set of information and instructing said second network element to re-transmit one or more of said plurality of data packets in dependence upon said second set of information,
if the number does exceed the predetermined number, transmitting a third message relating to said first and second sets of information to third network element and receiving an instruction from said third network element to re-transmit one or more of said plurality of data packets in dependence upon said first and second sets of information.

8. A method of recovery of a data packet in a network including first and second routers, the method comprising:
receiving at the first router, via a first path, first reception information relating to said data packet including information relating to the identity of the source of said first reception information;
receiving at the first router, via a second path, second reception information relating to said data packet including information relating to the identity of the source of said second reception information;
determining, at said first router, in dependence upon said first and second reception information signals, whether recovery of said data packet is required and, if so, transmitting information relating to said first and second reception information signals to said second router; and
determining at said second router, whether further reception state information relating to said data packet identifying a further source is received and whether recovery of said data packet in respect of said further source is required and, if not, instructing said first router to transmit said data packet for intended receipt by said sources of said first and second reception information.

9. A method according to any preceding claim wherein the network comprises a plurality of sub-networks.

10. A system for multicasting data from a sender to first, second and third receivers through a network including first and second routers, comprising:
a first router including:
an input to receive a first reception information signal relating to whether said data packet is properly received by said first receiver and a second reception information signal relating to whether said data packet is properly received by said second receiver;
a processor to determine in dependence upon said first and second reception information signals, whether said first and second receivers require re-transmission of said data packet and
an output to transmit information relating to said first and second detection information signals to said second router;
a second router including:
an input to receive said information from the first router and a third reception information signal relating to whether said data packet is properly received by said third receiver
a processor to determine whether said third receiver requires re-transmission of said data packet and
an output to transmit an instruction to said first router to re-transmit said data packet to said first and second receivers.

11. A system for multicasting data from a sender to first, second and third receivers through a plurality of networks including first and second routers, comprising:
a first router including:
an input to receive a first reception information signal relating to whether said data packet is properly received by said first receiver and a second reception information signal relating to whether said data packet is properly received by said second receiver;
a processor to determine in dependence upon said first and second reception information signals, whether said first and second receivers require re-transmission of said data packet and
an output to transmit information relating to said first and second detection information signals to said second router;
a second router including:
an input to receive said information from the first router and a third reception information signal relating to whether said data packet is properly received by said third receiver
a processor to determine whether said third receiver requires re-transmission of said data packet and
an output to transmit an instruction to said first router to re-transmit said data packet to said first and second receivers.

12. A router comprising:
means for receiving a first message comprising information relating to receipt of a data packet by a first receiver;
means for receiving a second message comprising information relating to receipt of a data packet by a second receiver,
means for determining in dependence upon said first and second messages whether said first and second receivers require re-transmission of said data packet and
means for transmitting a third message relating to receipt of said data packet by said first and second receivers to another router if said first and second receivers require re-transmission of said data packet and
means for receiving an instruction from said other router to retransmit said data packet to said first and second receivers.

13. A computer program comprising computer code operable to make data processing apparatus:
receive a first message comprising information relating to receipt of a data packet by a first receiver;
receive a second message comprising information relating to receipt of a data packet by a second receiver,
determine in dependence upon said first and second messages whether said first and second receivers require retransmission of said data packet and
transmit a third message relating to receipt of said data packet by said first and second receivers to a router if said first and second receivers require re-transmission of said data packet and
receive an instruction from said router to retransmit said data packet to said first and second receivers.
